(19) Europäisches Patentamt / European Patent Office / Office européen des brevets

(11) **EP 4 692 768 A1**

(12) **EUROPEAN PATENT APPLICATION**
published in accordance with Art. 153(4) EPC

(43) Date of publication:
**11.02.2026 Bulletin 2026/07**

(21) Application number: **24780111.1**

(22) Date of filing: **25.03.2024**

(51) International Patent Classification (IPC):
*G01N 21/64* (2006.01)    *G01N 21/03* (2006.01)
*G02B 13/18* (2006.01)    *G02B 15/10* (2006.01)
*G02B 21/36* (2006.01)

(52) Cooperative Patent Classification (CPC):
**G02B 13/18; G02B 15/10; G02B 21/36**

(86) International application number:
**PCT/JP2024/011561**

(87) International publication number:
**WO 2024/203993 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2023 JP 2023050048**

(71) Applicants:
• **MITSUBISHI GAS CHEMICAL COMPANY, INC.**
  **Chiyoda-ku**
  **Tokyo 100-8324 (JP)**
• **The University of Tokyo**
  **Bunkyo-ku, Tokyo 113-8654 (JP)**

(72) Inventors:
• **TAKASE, Yuki**
  **Tokyo 100-8324 (JP)**
• **TABATA, Kazuhito**
  **Tokyo 113-8654 (JP)**
• **YAGINUMA, Hideyuki**
  **Tokyo 113-8654 (JP)**

(74) Representative: **Müller-Boré & Partner**
**Patentanwälte PartG mbB**
**Friedenheimer Brücke 21**
**80639 München (DE)**

(54) **ANALYSIS DEVICE AND ANALYSIS METHOD**

(57)     The present disclosure relates to an analysis device including: a device holder configured to hold a microchamber device; a light source configured to irradiate the microchamber device with light; one or more aspheric lenses placed such that the optical axis thereof is substantially parallel to a normal line of a first surface of the microchamber device; an imaging apparatus configured to image the microchamber device via the aspheric lenses; a first optical filter positioned between the microchamber device and the imaging apparatus, the first optical filter cutting off light emitted from the light source and allowing at least a portion of light having a longer wavelength than the wavelength of the light emitted from the light source to pass therethrough; and a light-shielding unit configured to suppress the detection, by the imaging apparatus to be held, of light other than light generated from the microchamber device and detected by the imaging apparatus to be held via the first optical filter and the aspheric lenses.

[Fig.1]

EP 4 692 768 A1

## Description

### Technical Field

The present disclosure relates to an analysis device and an analysis method, particularly, an analysis device and an analysis method for use in the observation or measurement of phenomena or reaction related to cells or biomolecular samples, or the like in the fields of biochemistry, cellular biology, biophysics, and other fields of research, and in the observation or measurement related to other microparticles.

### Background Art

Digital assay is known as a measurement method that can detect several hundreds of thousands of individual molecules simultaneously. The digital assay is capable of quantitatively measuring a single-molecule level by confining an analyte on a single-molecule order in small spaces.

For example, Patent Literatures 1 to 7 and Non-Patent Literatures 1 and 2 each disclose a method or the like for conducting digital assay using a microchamber device provided with wells having a capacity on the order of fL.

### Citation List

### Patent Literature

Patent Literature 1: Japanese Patent No. 3727026

Patent Literature 2: Japanese Patent Laid-Open No. 2018-38384

Patent Literature 3: Japanese Patent Laid-Open No. 2022-31760

Patent Literature 4: International Publication No. WO 2017/200070

Patent Literature 5: International Publication No. WO 2018/181488

Patent Literature 6: International Publication No. WO 2019/168200

Patent Literature 7: International Publication No. WO 2020/179858

### Non-Patent Literature

Non-Patent Literature 1: K. V. Tabata et al., Sci.Rep., 2019, 9, 1067

Non-Patent Literature 2: Y. Minagawa et al., Lab on a Chip, 2019, 19, 2678

### Summary of Invention

### Technical Problem

None of the patent literatures and the non-patent literatures have yet achieved a device that can achieve digital assay conveniently and with high accuracy. For example, Non-Patent Literature 2 discloses a device for digital assay. Nonetheless, there is a demand for a device that can conduct digital assay more conveniently or with higher accuracy.

Accordingly, an object of the present invention is to provide an analysis device and an analysis method that can achieve digital assay conveniently and with high accuracy.

### Solution to Problem

An analysis device according to one embodiment of the present invention comprises: a device holder configured to hold a microchamber device; a light source configured to irradiate the microchamber device with light; one or more aspheric lenses placed such that the optical axis thereof is substantially parallel to a normal line of a first surface of the microchamber device; an imaging apparatus configured to image the microchamber device via the aspheric lenses; a first optical filter positioned between the microchamber device and the imaging apparatus, the first optical filter cutting off light emitted from the light source and allowing at least a portion of light having a longer wavelength than the wavelength of the light emitted from the light source to pass therethrough; and a light-shielding unit configured to suppress the detection, by the imaging apparatus, of light other than light generated from the microchamber device and detected by the imaging apparatus via the first optical filter and the aspheric lenses.

In the analysis device described above, the light source, the optical filter, the device holder, and the imaging apparatus are properly placed, and the light-shielding unit suppresses stray light from the outside. Therefore, stray light that becomes background noise in analysis is sufficiently low. Furthermore, one or more aspheric lenses are placed between the imaging apparatus and the device holder. Therefore, the flatness of an image is maintained, and the spatial resolution of the imaging apparatus can be improved while chromatic aberration is suppressed. As a result, the analysis device described above can achieve digital assay conveniently and with high accuracy.

The analysis device described above may comprise a plurality of the aspheric lenses.

Preferably, a plurality of the aspheric lenses are a first lens having positive optical power, a second lens having negative optical power, and a third lens having positive optical power in order from the microchamber device side, wherein each of both surfaces of the first lens, the second lens, and the third lens is an aspheric surface, and a plurality of the aspheric lenses satisfy the following expressions (1), (2), (3), (4), (5), and (6):

$$(1)\ 4.30 \leq f1/f \leq 4.95$$

$$(2)\ 0.120 \leq \phi1/n1 \leq 0.160$$

$$(3)\ 0.0030 \leq \phi1/v1 \leq 0.0050$$

$$(4)\ -3.20 \leq f2/f \leq -2.70$$

$$(5)\ -0.240 \leq \phi2/n2 \leq -0.160$$

$$(6)\ -0.0200 \leq \phi2/v2 \leq -0.0120$$

f: a focal length of the entire system of the attachment lens with respect to the d line,

f1: a focal length of the first lens with respect to the d line,

$\phi1$: a product of power of the first lens with respect to the d line and f, expressed as f/f1,

n1: a refractive index of the first lens with respect to the d line,

v1: an Abbe number of the first lens,

f2: a focal length of the second lens with respect to the d line,

$\phi2$: a product of power of the second lens with respect to the d line and f, expressed as f/f2,

n2: a refractive index of the second lens with respect to the d line,

v2: an Abbe number of the second lens.

The aspheric lenses described above satisfy the expressions (2) and (5) while satisfying the expressions (1) and (4), and can thereby further suppress deterioration in the flatness of an image obtained in the imaging apparatus. The aspheric lenses described above satisfy the expressions (3) and (6) while satisfying the expressions (1) and (4), and can thereby suppress chromatic aberration in an image obtained in the imaging apparatus.

In the analysis device described above, the aspheric lenses preferably further satisfy the expressions (7) and (8) given below. According to this aspect, the aspheric lenses satisfy the expression (7) given below and can thereby further suppress deterioration in the flatness of an image obtained in the imaging apparatus; and the aspheric lenses satisfy the expression (8) given below and can thereby further suppress chromatic aberration in an image obtained in the imaging apparatus.

$$(7)\ 0.000 \leq P \leq 0.510$$

$$(8)\ \text{-}0.0046 \leq Q \leq 0.0046$$

P: the sum of $\phi1/n1$, $\phi2/n2$, and $\phi3/n3$,

Q: the sum of $\phi1/\nu1$, $\phi2/\nu2$, and $\phi3/\nu3$,

$\phi3$: a product of power of the third lens with respect to the d line and f, expressed as f/f3,

f3: a focal length of the third lens with respect to the d line,

n3: a refractive index of the third lens with respect to the d line, and

v3: an Abbe number of the third lens.

In the analysis device described above, the aspheric lenses preferably further satisfy the expressions (9), (10), and (11) given below. According to this aspect, the aspheric lenses satisfy the expression (10) given below while satisfying the expression (9) given below, and can thereby further suppress deterioration in the flatness of an image obtained in the imaging apparatus. The aspheric lenses satisfy the expression (11) given below while satisfying the expression (9) given below, and can thereby further suppress chromatic aberration in an image obtained in the imaging apparatus.

$$(9)\ 1.10 \leq f3/f \leq 1.40$$

$$(10)\ 0.000 \leq \phi3/n3 \leq 0.600$$

$$(11)\ 0.0000 \leq \varphi3/\nu3 \leq 0.0200$$

f3: a focal length of the third lens with respect to the d line,

$\phi3$: a product of power of the third lens with respect to the d line and f, expressed as f/f3,

n3: a refractive index of the third lens with respect to the d line, and

v3: an Abbe number of the third lens.

In the analysis device described above, a plurality of the aspheric lenses may satisfy the expressions (I) to (XI) given below instead of the expressions (1) to (11). According to such an aspect, the aspheric lenses can suppress deterioration in the flatness of an image obtained in the imaging apparatus, suppress chromatic aberration, and in addition, allow for observation in a wide range. Each symbol is as defined in the expressions (1) to (11).

$$(I)\ \text{-}10.0 \leq f1/f \leq 8.00$$

$$(II)\ \text{-}0.1500 \leq \varphi1/\nu1 \leq 0.0500$$

$$(III)\ 0.100 \leq \varphi2/n2 \leq 2.000$$

$$(IV)\ -80.0 \le f3/f \le 30.0$$

$$(V)\ -0.300 \le \varphi3/n3 \le 0.900$$

$$(VI)\ -0.0200 \le \varphi3/\nu3 \le 0.0500$$

$$(VII)\ 0.000 \le P \le 0.800$$

$$(VIII)\ -0.0600 \le Q \le 0.0500$$

$$(IX)\ -1.500 \le \varphi1/n1 \le 0.300$$

$$(X)\ 0.500 \le f2/f \le 3.50$$

$$(XI)\ 0.0050 \le \varphi2/\nu2 \le 0.0400$$

In the analysis device described above, preferably, the aspheric lenses are formed of a non-fluorescent material. According to this aspect, in the analysis device, the aspheric lenses can prevent fluorescence from being generated by the lenses themselves due to light from the light source or luminescence from an analyte-containing sample in the microchamber device and from becoming noise in measurement.

The analysis device described above preferably further comprises a second optical filter positioned between the light source and the microchamber device, the second optical filter cutting off a portion of light emitted from the light source. According to this aspect, stray light that becomes background noise in analysis can be further suppressed among wavelengths of light involved in the light source. The second optical filter does not have to be positioned between the light source and the microchamber device in physical placement and may be positioned at any site in the optical path of light emitted to the microchamber device from the light source.

The analysis device described above preferably further comprises a lens or a waveguide positioned between the light source and the microchamber device, the lens or the waveguide guiding light from the light source to the first surface of the microchamber device. According to this aspect, the microchamber device can be efficiently irradiated with light from the light source. The lens or the waveguide does not have to be positioned between the light source and the microchamber device in physical placement and may be positioned at any site in the optical path of light emitted to the microchamber device from the light source.

In the analysis device described above, preferably, the device holder is configured to be movable in the normal line direction of the first surface of the microchamber device. According to this aspect, a focal point of the imaging apparatus is easily set to an observation site in the device holder because the device holder can be approached to or distanced from the imaging apparatus.

In the analysis device described above, the first surface of the microchamber device may have a plurality of wells thereon. According to this aspect, the analysis device may further comprise an information processor connected or integrated with the imaging apparatus, wherein the information processor is configured to detect a well that emits light in response to the light from the light source among the plurality of wells imaged.

An analysis method according to one embodiment of the present invention comprises: introducing an analyte-containing sample to the microchamber device of the analysis device described above; irradiating the sample with excitation light corresponding to a compound contained in the sample by the light source; and imaging the microchamber device with the imaging apparatus to detect luminescence derived from the compound excited with the excitation light. The analysis method described above conducts analysis using the analysis device described above and can therefore achieve digital assay conveniently and with high accuracy.

In the analysis method described above, preferably, the first optical filter cuts off light having a wavelength corresponding to the excitation light for the compound and allows light having a wavelength corresponding to the light emitted from the compound excited to pass therethrough. According to this aspect, light derived from the compound serving as a signal passes through the optical filter while stray light that becomes background noise in analysis is suppressed. Therefore, an SN ratio can be more improved.

The analysis device described above may comprise an imaging apparatus holder configured to hold an imaging

**EP 4 692 768 A1**

apparatus instead of the imaging apparatus. In this aspect, the imaging apparatus holder may partially constitute the light-shielding unit.

**Advantageous Effects of Invention**

The present invention can provide an analysis device and an analysis method that can achieve digital assay conveniently and with high accuracy.

**Brief Description of Drawings**

[Figure 1] Figure 1 is a schematic cross-sectional view showing one example of the analysis device of the present embodiment. The broken-line arrow depicts an optical path.

[Figure 2] Figure 2 is a schematic cross-sectional view showing one example of an optical system including aspheric lenses in the analysis device of the present embodiment.

[Figure 3] Figure 3 is a schematic cross-sectional view showing another example of the analysis device of the present embodiment. The broken-line arrow depicts an optical path.

[Figure 4] Figure 4 is a schematic cross-sectional view showing a further alternative example of the analysis device of the present embodiment. The broken-line arrow depicts an optical path.

[Figure 5] Figure 5 is a schematic cross-sectional view showing one example of the case of introducing an analyte-containing sample to a microchamber device in the analysis device of the present embodiment.

[Figure 6] Figure 6 is a diagram showing surfaces R1 to R11, and thicknesses (distances) d1 to d10 in Numerical Examples.

[Figure 7] Figure 7 is a schematic cross-sectional view showing an optical system of Numerical Example 6.

[Figure 8] Figure 8 is a schematic cross-sectional view showing an optical system of Numerical Example 7.

[Figure 9] Figure 9 is a schematic cross-sectional view showing an optical system of Numerical Example 8.

[Figure 10] Figure 10 is a schematic cross-sectional view showing an optical system of Numerical Example 9.

[Figure 11] Figure 11 is a schematic cross-sectional view showing an optical system of Numerical Example 10.

[Figure 12] Figure 12 is a schematic cross-sectional view showing an optical system of Numerical Example 11.

[Figure 13] Figure 13 is a diagram showing imaging results in Example 1 (a and c) and Comparative Example 1 (b and d). The bar indicated at the lower right part of each box denotes 100 $\mu$m.

[Figure 14] Figure 14 is a diagram showing imaging results in Example 2 (a and c) and Comparative Example 2 (b and d). The bar indicated at the lower right part of each box denotes 100 $\mu$m.

**Description of Embodiments**

Hereinafter, the mode for carrying out the present invention (hereinafter, referred to as the "present embodiment") will be described in detail with reference to the drawings. However, the present invention is not limited thereby, and various changes or modifications can be made in the present invention without departing from the spirit of the present invention. In the description of the drawings given below, the same or similar numerals or symbols are used to designate the same or similar portions. The drawings are schematic and do not necessarily correspond to actual dimensions, ratios, or the like. Portions differing in dimensional relationship or ratio may also be included between the drawings.

[First embodiment]

6

(Analysis device)

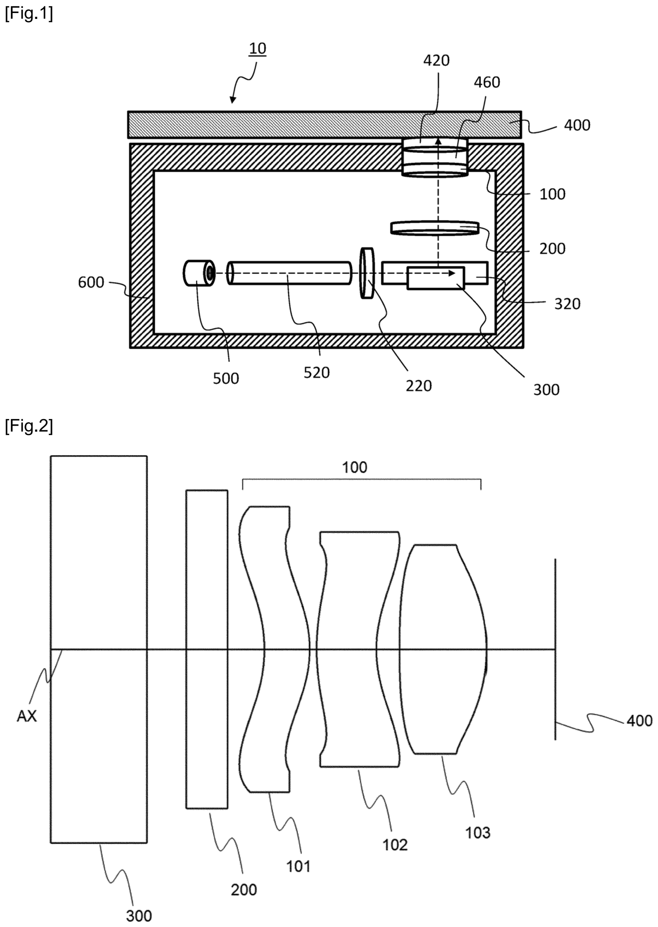

Figure 1 is a schematic cross-sectional view of an analysis device 10 of the present embodiment. As shown in Figure 1, the analysis device 10 comprises: a device holder 320 configured to hold a microchamber device 300; a light source 500 configured to irradiate the microchamber device 300 with light; one or more aspheric lenses 100 placed such that the optical axis thereof is substantially parallel to a normal line of a first surface of the microchamber device 300; an imaging apparatus 400 configured to image the microchamber device 300 via the aspheric lenses 100; a first optical filter 200 positioned between the microchamber device 300 and the imaging apparatus 400; and a light-shielding unit 600 that accommodates the microchamber device 300, the device holder 320, the light source 500, the aspheric lenses 100, and the first optical filter 200. In this context, the first optical filter 200 is an optical filter cutting off light emitted from the light source 500 and allowing at least a portion of light having a longer wavelength than the wavelength of the light emitted from the light source to pass through it. The imaging apparatus 400 images the microchamber device 300 by an imaging lens 420 via the aspheric lenses 100.

In the embodiment shown in Figure 1, the light source 500 irradiates the microchamber device with light from a direction substantially parallel to the first surface of the microchamber device 300. An angle formed between the direction of travel of the light emitted from the light source 500 and the first surface of the microchamber device 300 is not particularly limited. For example, the light source 500 may irradiate the microchamber device with light from a direction substantially perpendicular to the first surface of the microchamber device 300 or may irradiate the microchamber device with light from a direction that forms 45 degrees with respect to the first surface. The light source 500 may irradiate the microchamber device with light, for example, from an arbitrary direction with respect to the first surface via a waveguide mentioned later.

The analysis device 10 is used for analyzing an analyte-containing sample by irradiating the analyte-containing sample introduced to the microchamber device 300 with light from the light source 500, and imaging luminescence derived from a compound in the sample excited with the light using the imaging apparatus 400.

The microchamber device 300 is not particularly limited as long as the microchamber device may accommodate an analyte-containing sample which is a liquid, and allows a wavelength of luminescence from the analyte-containing sample to pass through it such that the luminescence is detectable by the imaging apparatus 400. Since the luminescence wavelength may vary depending on the type of the compound contained in the sample, a wavelength band that passes through the microchamber device 300 is not particularly limited. The microchamber device 300 may be, for example, transparent to visible light.

The microchamber device 300 may have a plurality of wells disposed on the first surface. The capacity of each well is not particularly limited and is, for example, 10 aL or more and 100 nL or less, preferably 1.0 fL or more and 1.0 pL or less. The opening diameter or bottom diameter of each well may be, for example, 1.0 $\mu$m or larger and 40 $\mu$m or smaller, and the depth may be approximately 400 nm or larger and 5.0 $\mu$m or smaller. The interval between the wells may be 1.0 $\mu$m or more and 100 $\mu$m or less. The area of a region where the plurality of wells are disposed on the first surface of the microchamber device 300 is not particularly limited and may be, for example 1 mm$^2$ or more and 10 cm$^2$ or less. The first surface of the microchamber device 300 is, for example, the bottom or an upper surface of the microchamber device 300.

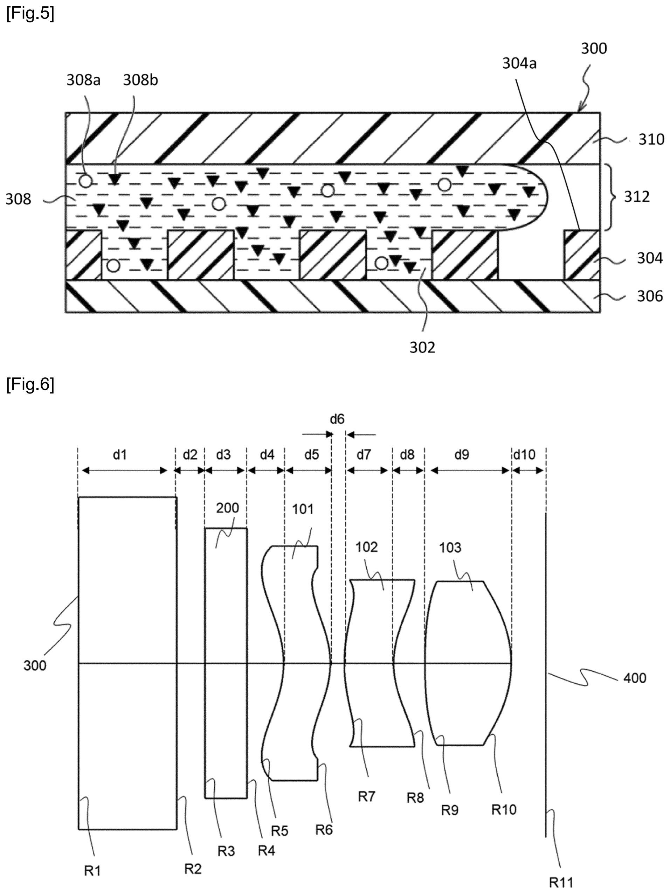

The wells disposed on the first surface of the microchamber device 300 may be formed, for example, such that the wells are separated from each other through sidewalls having a hydrophobic upper surface. More specifically, when wells 302 are separated from each other through sidewalls 304 having a hydrophobic upper surface 304a, as shown in detail in Figure 5 mentioned later, an analyte-containing sample can be introduced only to the plurality of wells by introducing a hydrophilic solution which is the analyte-containing sample to the microchamber device 300 and then introducing a hydrophobic solution thereto. Thus, the analyte-containing sample can be divided into volumes appropriate for the capacity of each well.

The first surface of the microchamber device 300 may comprise, as shown in Figure 5, a plate-like member 306 and the sidewalls 304 having the hydrophobic upper surface 304a. In this aspect, the plate-like member 306 preferably has a hydrophilic surface. The "hydrophilic surface" refers to a surface having higher affinity for a hydrophilic solvent than that for a hydrophobic solvent. The plate-like member may be a solid material. Examples thereof include glass, silicon, and polymer resins.

The sidewalls 304 are structures that are disposed on a surface, preferably a hydrophilic surface, of the plate-like member 306, and separate the plurality of wells 302 from each other. The sidewalls 304 have the hydrophobic upper surface 304a. In this context, the term "hydrophobic" is used in the same meaning with "lipophilic" and refers to having higher affinity for a hydrophobic solvent than that for a hydrophilic solvent.

The wells 302 have a portion of the surface of the plate-like member 306 as the bottom and are regions surrounded by the sidewalls 304. Thus, the bottom of the wells 302 is preferably hydrophilic. The shape of a region surrounded by the bottom and the side of the wells may be, for example, a cylindrical shape or a prismatic shape.

The microchamber device 300 is placed in the device holder 320 after or before introduction of an analyte-containing sample. In Figure 1, the microchamber device 300 may be placed such that the first surface faces the imaging apparatus 400 (i.e., faces up in Figure 1). The microchamber device 300 may have a lid portion opposed to the first surface so as not to leak the analyte-containing sample in the microchamber device 300 when placed in the device holder 320 with the first surface facing up. The configuration of the lid portion is not particularly limited. The microchamber device 300 may be placed such that a surface different from the first surface faces the imaging apparatus 400, and may be placed, for example, such that a surface opposed to the first surface faces the imaging apparatus 400.

A lid portion 310 shown in Figure 5 is positioned opposed to the first surface of the microchamber device 300 and thereby forms a space composed of a flow path 312 and the wells 302 in the microchamber device 300. The surface (i.e., the surface constituting the flow path 312) of the lid portion 310 opposed to the first surface of the microchamber device 300 may be hydrophobic. In this case, preferably, in the space formed in the microchamber device 300, for example, the lid portion 310 is hydrophobic; the upper surface and the side of the sidewalls 304 formed on the first surface are hydrophobic; and the bottom of the wells 302 is hydrophilic, because a hydrophilic solution is easily introduced only into the wells 302.

Examples of the microchamber device 300 include devices described in Examples and devices described in K. V. Tabata et al., Sci. Rep., 2019, 9, 1067.

The device holder 320 is a member for holding the microchamber device 300 at a predetermined position. The device holder 320 may be fixed or may be movable and is preferably movable in the normal line direction of the first surface of the microchamber device 300, i.e., in the vertical direction of Figure 1. According to this aspect, a focal point of the imaging apparatus 400 is easily set to an observation site in the device holder 320 because the device holder 320 can be approached to or distanced from the imaging apparatus 400.

The analyte-containing sample introduced to the microchamber device 300 is excited with light emitted from the light source 500. The light source 500 is not particularly limited and may be, for example, a light-emitting diode element (LED element). The wavelength of the light to be emitted from the light source 500 may be appropriately changed depending on the type of a compound contained in the sample. The light source 500 may emit light with the wavelength of, for example, an absorption peak of a fluorescent material contained in the sample. The light emitted from the light source 500 passes through a second optical filter 220 as mentioned later to irradiate the microchamber device 300. Therefore, the light from the light source 500 may be monochromatic light and may be white light.

The light emitted from the light source 500 is led to the microchamber device 300 via a second optical filter 220 through a waveguide 520. Examples of the waveguide 520 include, but are not particularly limited to, optical fibers and photonic crystals. The analysis device 10 may comprise another optical element, such as a lens or a mirror, for leading the light from the light source 500 to the microchamber device 300, particularly, the plurality of wells disposed on the microchamber device 300, instead of or in addition to the waveguide 520.

The second optical filter 220 partially cuts off a wavelength band of the light emitted from the light source 500. The second optical filter 220 may mainly cut off, for example, light with a luminescence or fluorescence wavelength of a luminescent material or a fluorescent material in an analyte-containing sample contained in the microchamber device 300, among light wavelengths involved in the light source 500, and may mainly cut off light with a wavelength other than an excitation wavelength for a fluorescent material in an analyte-containing sample contained in the microchamber device 300. The second optical filter 220 may be a band-pass filter that mainly allows the light emitted from the light source 500 to pass through it.

The light emitted from the light source 500 passes through the second optical filter 220 to irradiate the bottom of the microchamber device 300 from a direction substantially parallel to the first surface of the microchamber device 300. The light used in irradiation propagates through the inside of a member (e.g., the plate-like member 306 of Figure 5) constituting the first surface of the microchamber device 300 by total reflection so that the light emerges as an evanescent wave from the member constituting the first surface of the microchamber device 300 to the inside of the wells. When the microchamber device 300 contains a substance that is excited with the light, the substance is excited with the evanescent wave to generate light, typically, fluorescence.

In this way, the substance contained in the sample in the microchamber device 300 emits light. The imaging apparatus 400 detects the emitted light via the imaging lens 420, the aspheric lenses 100, and the first optical filter 200.

The first optical filter 200 cuts off light emitted from the light source 500 and allows at least a portion of light having a longer wavelength than the wavelength of the light emitted from the light source 500 to pass through it. The transmission wavelength of the first optical filter 200 is selected such that light emitted from the substance contained in the sample passes therethrough. Thus, the first optical filter 200 mainly cuts off light emitted from the light source 500, which becomes noise in analysis, and on the other hand, mainly allows light emitted from the compound contained in the sample to pass through it.

The imaging apparatus 400 images the microchamber device 300 via the imaging lens 420 and the aspheric lenses 100 and detects luminescence from an analyte-containing sample in the microchamber device 300. The imaging lens 420 may be an imaging lens attached to the imaging apparatus 400. Examples of the imaging apparatus 400 include information processing terminals such as microscopes, cameras, smartphones, and tablets. The aspheric lenses 100, the details of which will be mentioned later, play a role in zooming an imaging region of the imaging apparatus 400 and enhancing the spatial resolution of the imaging apparatus 400. The aspheric lenses 100 in the analysis device 10 enhance the spatial resolution of the imaging apparatus 400 and thereby the whole optical performance including the imaging lens attached to the imaging apparatus is not deteriorated, so that a fine target object can be observed with high resolution.

The imaging apparatus 400 may have a function as an information processor such as a smartphone and a tablet or may be connected to an information processor. The imaging apparatus 400 may send image data to an information processor by or without wire, followed by information processing, or an information processor integrated with the imaging apparatus may perform information processing.

In Figure 1, the aspheric lenses 100, the first optical filter 200, the device holder 320, the microchamber device 300, the second optical filter 220, the light source 500, and the waveguide 520 are accommodated in the light-shielding unit 600. The light-shielding unit 600 prevents analysis accuracy from being reduced due to stray light from an outside environment. The light-shielding unit is not particularly limited as long as the unit suppresses the entrance of light from the outside to the inside of the analysis device, more specifically, the unit suppresses or substantially inhibits the detection, by the imaging apparatus, light other than light that is generated from the microchamber device and detected by the imaging apparatus via the first optical filter and the aspheric lenses. Examples of such a light-shielding unit include light-shielding cases (dark boxes), light-shielding sheets, and light-shielding curtains. The light-shielding unit may be made of a resin, a metal, wood, or cloth.

The light-shielding unit 600 may suppress the entrance of light with the same or similar wavelength as that of light from the microchamber device, to the inside of the analysis device 10, and preferably blocks visible light and more preferably blocks visible light and ultraviolet light.

In Figure 1, the imaging apparatus 400 is placed outside the light-shielding unit 600. A hole 460 is formed in the imaging apparatus 400, and the imaging apparatus 400 images the microchamber device 300 from the hole 460. In the light-shielding unit 600, the hole 460 is closed by covering the hole 460 with the imaging lens 420 or inserting the imaging lens 420 to the hole 460. This can substantially prevent the detection, by the imaging lens 420, of light from the outside of the light-shielding unit 600. The light-shielding unit 600 may be provided with a sealing unit for sealing a gap resulting from the insertion of the imaging lens 420 to the hole 460 or a gap resulting from the covering of the hole 460 with the imaging lens 420. Examples of the sealing unit include members made of resins (e.g., rubber rings) and adhesives. The imaging apparatus 400 may be placed inside the light-shielding unit 600.

(Aspheric lens)

The analysis device 10 comprises one or more aspheric lenses 100. The aspheric lenses 100 function as a so-called attachment lens which has a role in enhancing the spatial resolution of the imaging apparatus 400. The analysis device 10 comprises the aspheric lenses 100 as an attachment lens and can therefore maintain flatness and improve the spatial resolution of the imaging apparatus 400 while suppressing chromatic aberration. A spherical lens, when used as an attachment lens, tends to disrupt aberration balance and easily deteriorate optical performance in the whole optical system including the imaging lens and the attachment lens.

At least one of the aspheric lenses 100 has positive optical power. This can enhance the spatial resolution of the imaging apparatus 400.

Figure 2 shows a schematic cross-sectional view of one example of a configurational form of the aspheric lenses 100. In Figure 2, a first lens 101, a second lens 102, and a third lens 103 are placed as the aspheric lenses 100. Figure 2 shows an example in which the aspheric lenses 100 are mounted to the imaging lens 420 which images the microchamber device 300 via the first optical filter 200. Figure 2 shows only the bottom part of the microchamber device 300, and the aspheric lens 100 side of the microchamber device 300 is the outer side of the microchamber device 300 while the side opposite to the aspheric lenses 100 of the microchamber device 300 is the inner side of the microchamber device 300. An optical axis AX of each of the aspheric lenses 100, the first optical filter 200, and the imaging lens 420 is placed so as to substantially correspond to an observation site of the microchamber device 300. The observation site is, for example, a plurality of wells disposed on the first surface of the microchamber device 300. The plurality of wells in Figure 2 are disposed on a surface on the side opposite to the aspheric lenses 100.

In Figure 2, the aspheric lenses 100 consist of a first lens 101 having positive optical power, a second lens 102 having negative optical power, and a third lens 103 having positive optical power in order from the microchamber device 300 side.

Each of both surfaces of the first lens 101, the second lens 102, and the third lens 103 is an aspheric surface. The aspheric lenses 100 preferably satisfy the following expressions (1), (2), (3), (4), (5), and (6):

$$(1)\ 4.30 \leq f1/f \leq 4.95$$

$$(2)\ 0.120 \leq \varphi1/n1 \leq 0.160$$

$$(3)\ 0.0030 \le \varphi1/\nu1 \le 0.0050$$

$$(4)\ \text{-}3.20 \le f2/f \le \text{-}2.70$$

$$(5)\ \text{-}0.240 \le \varphi2/n2 \le \text{-}0.160$$

$$(6)\ \text{-}0.0200 \le \varphi2/\nu2 \le \text{-}0.0120$$

f: a focal length of the entire system of the attachment lens with respect to the d line,

f1: a focal length of the first lens with respect to the d line,

$\phi$1: a product of power of the first lens with respect to the d line and f, expressed as f/f1,

n1: a refractive index of the first lens with respect to the d line,

v1: an Abbe number of the first lens,

f2: a focal length of the second lens with respect to the d line,

$\phi$2: a product of power of the second lens with respect to the d line and f, expressed as f/f2,

n2: a refractive index of the second lens with respect to the d line, and

v2: an Abbe number of the second lens.

In the present specification, the Abbe number is a value $\nu_d$ defined according to the following expression using a refractive index $n_d$ according to the Fraunhofer's d line (587.56 nm), a refractive index $n_F$ with respect to the F line (486.1 nm), and a refractive index $n_C$ with respect to the C line (656.3 nm).

$$\nu_d = (n_d - 1) / (n_F - n_C)$$

The term "lens has positive optical power" means that the power of the lens with respect to the d line, i.e., the reciprocal of the focal length of the lens with respect to the d line, is positive. The term "lens has negative optical power" means that the power of the lens with respect to the d line, i.e., the reciprocal of the focal length of the lens with respect to the d line, is negative.

The expressions (1) and (4) each define the ratio of the focal length of the first lens 101 or the second lens 102 to the focal length of the entire system of the aspheric lens 100. The ratio of the focal length of the third lens 103 to the focal length of the entire system of the aspheric lens 100 will be mentioned later and may be adjusted such that a desired focal length f of the entire system is obtained in the aspheric lens 100 in a range that satisfies the expressions (1) and (4).

f1/f may be 4.33 or more, 4.34 or more, 4.51 or more, 4.62 or more, or 4.90 or more in the range of the expression (1). f1/f may be 4.94 or less, 4.63 or less, 4.52 or less, or 4.35 or less in the range of the expression (1).

f2/f may be -3.18 or more, -3.05 or more, -3.01 or more, -3.00 or more, -2.88 or more, or -2.76 or more in the range of the expression (4). f2/f may be -2.80 or less, -2.87 or less, -3.00 or less, or -3.17 or less in the range of the expression (4).

Each value of f, f1, and f2 is not particularly limited because the value can be appropriately adjusted by so-called scaling, which changes the size of the optical system while maintaining the relationship of each configuration of the aspheric lens 100. f may be, for example, 1.10 mm or more and 10.0 mm or less, may be 1.20 mm or more and 5.00 mm or less, or may be 1.30 mm or more and 2.00 mm or less. Provided that f is set, f1 and f2 are designed so as to satisfy the expressions (1) and (4), respectively.

f may be adjusted depending on the focal length of the imaging lens 420 and a desired magnifications. The magnification ratio of the attachment lens means the ratio of an image size in the presence of the mounted attachment lens to an image size in the absence of the mounted attachment lens. A magnification ratio $\beta$ depends on a focal length $f_{400}$ of the imaging lens, the focal length f of the attachment lens, and the distance between the imaging lens and the attachment lens, for example.

The magnification $\beta$ of the aspheric lens 100 is preferably larger than 1.00, more preferably 1.10 or more, further preferably 1.20 or more. The focal length f of the aspheric lens 100 may be appropriately adjusted such that $\beta$ falls within the range described above, depending on a value of the focal length $f_{400}$ of the imaging lens 420.

The expressions (2) and (5) each define a value of the ratio of the power to the refractive index of each lens normalized with the power (1/f) of the aspheric lens 100 as to the first lens 101 and the second lens 102. In an optical system including a plurality of lenses, the flatness of an image plane of the whole optical system is improved, i.e., the image plane is prevented from being curved, when the total ratio of the power to the refractive index of the lenses approaches 0. The total ratio of the power to the refractive index of the lenses or a value of the total ratio normalized with the power of the entire optical system is also called Petzval sum. In the aspheric lens 100, $\phi1/n1$ and $\phi2/n2$ are defined by the expressions (2) and (5), respectively. Therefore, the Petzval sum in the aspheric lens 100 can be allowed to approach 0 by appropriately adjusting the value of the ratio of the power to the refractive index of the third lens 103 normalized with the power (1/f) of the aspheric lens 100. This can prevent deterioration in the flatness of an image obtained in the imaging apparatus 400. $\phi i$ (i = 1, 2, or 3) is also interpreted as the ratio of the power of the ith lens (1/fi) (i = 1, 2, or 3) with respect to the d line to the power of the entire system of the aspheric lens 100 (1/f) with respect to the d line.

$\phi1/n1$ may be 0.130 or more, 0.140 or more, 0.144 or more, or 0.150 or more in the range of the expression (2). $\phi1/n1$ may be 0.155 or less, 0.145 or less, 0.142 or less, 0.140 or less, or 0.135 or less in the range of the expression (2).

$\phi2/n2$ may be -0.230 or more, -0.220 or more, -0.210 or more, -0.205 or more, or -0.190 or more in the range of the expression (5). $\phi2/n2$ may be -0.180 or less, - 0.190 or less, -0.200 or less, or -0.210 or less in the range of the expression (5).

The value of n1 is not particularly limited as long as $\phi1/n1$ satisfies the expression (2). The value may be, for example, 1.20 or more and 2.00 or less and is preferably 1.20 or more and 1.80 or less, more preferably 1.40 or more and 1.70 or less, further preferably 1.45 or more and 1.60 or less.

The value of n2 is not particularly limited as long as $\phi2/n2$ satisfies the expression (5). The value may be, for example, 1.30 or more and 2.10 or less and is preferably 1.40 or more and 1.90 or less, more preferably 1.50 or more and 1.80 or less, further preferably 1.55 or more and 1.75 or less.

The magnitude relationship between n1 and n2 is not particularly limited, and n2 is preferably larger, more preferably larger by 0.05 or more or 0.10 or more than n1. In this case, the upper limit value of the difference of n2 from n1 is not particularly limited and may be, for example, 0.50, 0.40, 0.30, or 0.20.

The expressions (3) and (6) each define a value of the ratio of the power to the Abbe number of each lens normalized with the power (1/f) of the aspheric lens 100 as to the first lens 101 and the second lens 102. In an optical system including a plurality of lenses, chromatic aberration can be suppressed in the whole optical system when the total ratio of the power to the Abbe number of the lenses approaches 0. In the aspheric lens 100, $\phi1/\nu1$ and $\phi2/\nu2$ are defined by the expressions (3) and (6), respectively. Therefore, the total ratio in the aspheric lens 100 can be allowed to approach 0 by appropriately adjusting the value of the ratio of the power to the Abbe number of the third lens 103 normalized with the power (1/f) of the aspheric lens 100. This can reduce chromatic aberration in an image obtained in the imaging apparatus 400.

$\phi1/\nu1$ may be 0.0035 or more, 0.0038 or more, 0.0039 or more, or 0.0040 or more in the range of the expression (3). $\phi1/\nu1$ may be 0.0045 or less, 0.0042 or less, 0.0040 or less, or 0.0039 or less in the range of the expression (3).

$\phi2/\nu2$ may be -0.0190 or more, -0.0185 or more, -0.0170 or more, -0.0160 or more, or -0.0150 or more in the range of the expression (6). $\phi2/\nu2$ may be -0.0130 or less, -0.0140 or less, -0.0150 or less, or -0.0160 or less in the range of the expression (6).

The value of $\nu1$ is not particularly limited as long as $\phi1/\nu1$ satisfies the expression (3). The value may be, for example, 20 or more and 100 or less and is preferably 30 or more and 90 or less, more preferably 40 or more and 70 or less.

The value of $\nu2$ is not particularly limited as long as $\phi2/\nu2$ satisfies the expression (6). The value may be, for example, 5.0 or more and 80 or less and is preferably 10 or more and 60 or less, more preferably 15 or more and 40 or less.

The magnitude relationship between $\nu1$ and $\nu2$ is not particularly limited, and $\nu1$ is preferably larger, more preferably larger by 10 or more or 20 or more than $\nu2$. In this case, the upper limit value of the difference of $\nu1$ from $\nu2$ is not particularly limited and may be, for example, 100, 80, 60, 50, or 40.

The aspheric lens 100 preferably further satisfies the following expressions (7) and (8):

$$(7) \quad 0.000 \le P \le 0.510$$

$$(8) \quad -0.0046 \le Q \le 0.0046$$

P: the sum of $\phi1/n1$, $\phi2/n2$, and $\phi3/n3$,

Q: the sum of $\phi1/\nu1$, $\phi2/\nu2$, and $\phi3/\nu3$,

$\phi3$: a product of power of the third lens with respect to the d line and f, expressed as f/f3,

f3: a focal length of the third lens with respect to the d line,

n3: a refractive index of the third lens with respect to the d line, and

v3: an Abbe number of the third lens.

P in the expression (7) is a value corresponding to the Petzval sum. In the aspheric lenses 100, the first lens 101, the second lens 102, and the third lens 103 are aspheric lenses. Therefore, high flatness is achieved for an image obtained in the imaging apparatus 400 when the first lens 101 and the second lens satisfy the expressions (2) and (5), respectively. When P satisfies the expressions (7), higher flatness can be achieved for an image obtained in the imaging apparatus 400.

P may be 0.050 or more, 0.100 or more, 0.200 or more, 0.300 or more, or 0.400 or more in the range of the expression (7). P is preferably 0.500 or less, more preferably 0.490 or less, further preferably 0.482 or less, in the range of the expression (7).

Q in the expression (8) is a value related mainly to chromatic aberration in an image obtained in the imaging apparatus 400. In the aspheric lenses 100, the first lens 101, the second lens 102, and the third lens 103 are aspheric lenses. Therefore, chromatic aberration is suppressed for an image obtained in the imaging apparatus 400 when the first lens 101 and the second lens satisfy the expressions (3) and (6), respectively. When Q satisfies the expressions (8), chromatic aberration can be more reduced for an image obtained in the imaging apparatus 400.

Q is preferably -0.0040 or more, more preferably -0.0030 or more, further preferably -0.0010 or more, still further preferably 0.0000 or more, in the range of the expression (8). Q is preferably 0.0042 or less or 0.0040 or less in the range of the expression (8). Q may be 0.0038 or less, or 0.0035 or less.

The aspheric lens 100 may satisfy the following expressions (2A), (3A), (5A), (6A), (7A), and (8A) instead of the expressions (2), (3), (5), (6), (7), and (8):

$$(2A)\ 0.080 \leq 1/f1n1 \leq 0.110$$

$$(3A)\ 0.0020 \leq 1/f1\nu1 \leq 0.0035$$

$$(5A)\ -0.160 \leq 1/f2n2 \leq -0.110$$

$$(6A)\ -0.0140 \leq 1/f2\nu2 \leq -0.0080$$

$$(7A)\ 0.000 \leq P' \leq 0.350$$

$$(8A)\ -0.0031 \leq Q' \leq 0.0031$$

P': the sum of 1/f1n1, 1/f2n2, 1/f3n3, and

Q': the sum of 1/f1v1, 1/f2v2, and 1/f3v3.

1/f1n1 may be 0.090 or more, 0.094 or more, 0.095 or more, or 0.098 or more in the range of the expression (2A). 1/f1n1 may be 0.105 or less, 0.98 or less, 0.095 or less, 0.093 or less, or 0.090 or less in the range of the expression (2A).

1/f1$\nu$1 may be 0.0023 or more, 0.0025 or more, 0.0026 or more, or 0.0027 or more in the range of the expression (3A). 1/f1v1 may be 0.0030 or less, 0.0028 or less, 0.0026 or less, or 0.0025 or less in the range of the expression (3A).

1/f2n2 may be -0.150 or more, -0.142 or more, -0.140 or more, -0.130 or more, or -0.127 or more in the range of the expression (5A). 1/f2n2 may be -0.120 or less, -0.125 or less, -0.135 or less, or -0.140 or less in the range of the expression (5A).

1/f2v2 may be -0.0125 or more, -0.0110 or more, -0.0105 or more, or -0.0100 or more in the range of the expression (6A). 1/f2v2 may be -0.0085 or less, -0.0090 or less, -0.0100 or less, or -0.0105 or less in the range of the expression (6A).

P' and Q' are values obtained by dividing P and Q, respectively, by f.

P' may be 0.030 or more, 0.070 or more, 0.130 or more, 0.200 or more, or 0.250 or more in the range of the expression (7A). P' is preferably 0.340 or less, more preferably 0.330 or less, further preferably 0.320 or less, in the range of the expression (7A).

Q' is preferably -0.0028 or more, more preferably -0.0020 or more, further preferably -0.0010 or more, still further preferably 0.0000 or more, in the range of the expression (8A). Q' is preferably 0.0029 or less or 0.0028 or less in the range of the expression (8A). Q' may be 0.0025 or less or 0.0023 or less.

The aspheric lens 100 preferably satisfies the expressions (9), (10), and (11) given below. The aspheric lens 100 preferably satisfies the following expressions (9), (10), and (11) in addition to the expressions (1) to (6) and more preferably satisfies the following expressions (9), (10), and (11) in addition to the expressions (1) to (8).

$$(9)\ 1.10 \leq f3/f \leq 1.40$$

$$(10)\ 0.000 \leq \varphi3/n3 \leq 0.600$$

$$(11)\ 0.0000 \leq \varphi3/v3 \leq 0.0200$$

f3, $\phi$3, n3, and v3 are defined as mentioned above.

The expressions (9) to (11) define the characteristics of the third lens 103. Since the first lens 101 and the second lens 102 satisfy the expressions (1) to (6), the aspheric lenses 100 do not deteriorate the optical performance of an image obtained in the imaging apparatus 400 even when mounted to an existing imaging lens, and enable a fine target object to be observed with high resolution. Desired characteristics can be achieved in the aspheric lenses 100 by appropriately adjusting the characteristics of the third lens 103. When the third lens 103 satisfies the expressions (9) to (11), the aspheric lenses 100 can further suppress deterioration in the flatness of an image obtained in the imaging apparatus 400 and chromatic aberration.

The expression (9) defines the ratio of the focal length of the third lens 103 to the focal length of the entire system of the aspheric lens 100.

f3/f may be 1.15 or more, 1.20 or more, or 1.24 or more in the range of the expression (9). f3/f may be 1.35 or less, 1.30 or less, or 1.28 or less in the range of the expression (9). The value of f3 is not particularly limited because the value can be appropriately adjusted by the scaling of the aspheric lens 100.

The expression (10) defines a value of the ratio of the power to the refractive index of the third lens 103 normalized with the power (1/f) of the aspheric lens 100.

$\phi$3/n3 may be 0.100 or more, 0.300 or more, 0.400 or more, 0.450 or more, or 0.500 or more in the range of the expression (10). $\phi$3/n3 may be 0.580 or less, 0.550 or less, or 0.530 or less in the range of the expression (10).

The value of n3 is not particularly limited. The value may be, for example, 1.20 or more and 2.00 or less and is preferably 1.20 or more and 1.80 or less, more preferably 1.40 or more and 1.70 or less, further preferably 1.45 or more and 1.60 or less. The magnitude relationship among n1, n2, and n3 is not particularly limited, and n3 is preferably smaller than n2. n3 and n1 may be the same and may be in the range of n1 $\pm$ 0.10.

The expression (11) defines a value of the ratio of the power to the Abbe number of the third lens 103 normalized with the power (1/f) of the aspheric lens 100.

$\phi$3/v3 may be 0.0050 or more, 0.0100 or more, or 0.0140 or more in the range of the expression (11). $\phi$3/v3 may be 0.0190 or less, 0.0180 or less, or 0.0150 or less in the range of the expression (11).

The value of v3 is not particularly limited. The value may be, for example, 20 or more and 100 or less and is preferably 30 or more and 90 or less, more preferably 40 or more and 70 or less. The magnitude relationship among v1, v2, and v3 is not particularly limited, and v3 is preferably larger than v2. v3 and v1 may be the same and may be in the range of n1 $\pm$ 5.0.

The aspheric lens 100 may satisfy the following expressions (10A) and (11A) instead of the expressions (10) and (11):

$$(10A)\ 0.000 \leq 1/f3n3 \leq 0.400$$

$$(11A)\ 0.0000 \leq 1/f3v3 \leq 0.0140$$

1/f3n3 may be 0.060 or more, 0.200 or more, 0.250 or more, 0.300 or more, or 0.330 or more, in the range of the expression (10A). 1/f3n3 may be 0.380 or less, 0.370 or less, or 0.360 or less in the range of the expression (10A).

1/f3v3 may be 0.0030 or more, 0.0070 or more, or 0.0090 or more in the range of the expression (11A). 1/f3v3 may be 0.0130 or less, 0.0120 or less, or 0.0100 or less in the range of the expression (11A).

A material constituting each of the first lens 101, the second lens 102, and the third lens 103 is not particularly limited and may be, for example, an inorganic material such as glass, may be an organic material such as a resin, or may be a composite material of inorganic and organic materials combined.

The first lens 101, the second lens 102, and the third lens 103 are preferably formed of a non-fluorescent material. According to this aspect, in the analysis device 10, the aspheric lenses can prevent fluorescence from being generated by the lenses themselves due to light from the light source 500 or luminescence from an analyte-containing sample in the microchamber device 300 and from becoming noise in measurement.

In an aspect in which each of the first lens 101, the second lens 102, and the third lens 103 is formed of a non-fluorescent material, the aspheric lens 100 preferably satisfies the expressions (1'), (2'), (3'), (4'), (5'), and (6') given below, more preferably further satisfies the expressions (7') and (8') given below or the expressions (9'), (10'), and (11') given below, and further preferably further satisfies the expressions (7'), (8'), (9'), (10'), and (11') given below. According to this aspect, the aspheric lenses can prevent luminescence of the lenses themselves and in addition, can further suppress deterioration in the flatness of an image obtained in the imaging apparatus 400 and chromatic aberration.

$$(1') \ 4.33 \leq f1/f \leq 4.94$$

$$(2') \ 0.130 \leq \varphi1/n1 \leq 0.155$$

$$(3') \ 0.0035 \leq \varphi1/v1 \leq 0.0042$$

$$(4') \ -3.05 \leq f2/f \leq -2.70$$

$$(5') \ -0.230 \leq \varphi2/n2 \leq -0.180$$

$$(6') \ -0.0190 \leq \varphi2/v2 \leq -0.0130$$

$$(7') \ 0.000 \leq P \leq 0.482$$

$$(8') \ -0.0040 \leq Q \leq 0.0040$$

$$(9') \ 1.20 \leq f3/f \leq 1.30$$

$$(10') \ 0.400 \leq \varphi3/n3 \leq 0.550$$

$$(11') \ 0.0100 \leq \varphi3/v3 \leq 0.0150$$

f, f1, f2, f3, n1, n2, n3, v1, v2, v3, $\phi$1, $\phi$2, $\phi$3, P, and Q are defined as mentioned above.

In this aspect, the aspheric lens 100 may satisfy the following expressions (2A'), (3A'), (5A'), (6A'), (7A'), (8A'), (10A'), and (11A') instead of the expressions (2'), (3'), (5'), (6'), (7'), (8'), (10'), and (11'):

$$(2A') \ 0.085 \leq 1/f1n1 \leq 0.105$$

$$(3A') \ 0.0023 \leq 1/f1v1 \leq 0.0028$$

$$(5A') \ -0.150 \leq 1/f2n2 \leq -0.140$$

$$(6A') -0.0105 \leq 1/f2\nu2 \leq -0.0090$$

$$(7A') 0.000 \leq P' \leq 0.320$$

$$(8A') -0.0028 \leq Q' \leq 0.0028$$

$$(10A') 0.300 \leq 1/f3n3 \leq 0.370$$

$$(11A') 0.0070 \leq 1/f3\nu3 \leq 0.0100$$

P' and Q' are defined as mentioned above.

In the expressions (1') to (11'), the values of f1/f, $\phi$1/n1, $\phi$1/$\nu$1, f2/f, $\phi$2/n2, $\phi$2/$\nu$2, P, Q, f3/f, $\phi$3/n3, $\phi$3/$\nu$3, f, n1, n2, n3, v1, v2, and v3 may fall within ranges obtained by arbitrarily combining the upper limit values and the lower limit values listed in the expressions (1) to (11), in the ranges of the expressions (1') to (11'). In the expressions (2A'), (3A'), (5A'), (6A'), (7A'), (8A'), (10A'), and (11A'), the values of 1/f1n1, 1/f1v1, 1/f2n2, 1/f2v2, P', Q', 1/f3n3, and 1/f3v3 may fall within ranges obtained by arbitrarily combining the upper limit values and the lower limit values listed in the expressions (2A), (3A), (5A), (6A), (7A), (8A), (10A), and (11A).

The expressions (1') to (11') and (2A'), (3A'), (5A'), (6A'), (7A'), (8A'), (10A'), and (11A') are expressions that further limit the numerical ranges of the expressions (1) to (11) and (2A), (3A), (5A), (6A), (7A), (8A), (10A), and (11A). When each of the first lens 101, the second lens 102, and the third lens 103 is formed of a non-fluorescent material, the refractive index, the Abbe number, and the shape of each lens may be limited to some extent. When the numerical ranges of the expressions (1) to (11) are limited to the ranges of the expressions (1') to (11') and (2A'), (3A'), (5A'), (6A'), (7A'), (8A'), (10A'), and (11A'), the resulting aspheric lenses can further suppress deterioration in the flatness of an image obtained in the imaging apparatus 400 and chromatic aberration.

In another aspect, the aspheric lenses 100 may consist of a first lens having positive or negative optical power, a second lens having positive optical power, and a third lens having positive or negative optical power in order from the microchamber device 300 side. Each of both surfaces of the first lens 101, the second lens 102, and the third lens 103 is an aspheric surface. The aspheric lenses 100 also preferably satisfy the following expressions (I), (II), (III), (IV), (V), and (VI):

$$(I) -10.0 \leq f1/f \leq 8.00$$

$$(II) -0.1500 \leq \varphi1/\nu1 \leq 0.0500$$

$$(III) 0.100 \leq \varphi2/n2 \leq 2.000$$

$$(IV) -80.0 \leq f3/f \leq 30.0$$

$$(V) -0.300 \leq \varphi3/n3 \leq 0.900$$

$$(VI) -0.0200 \leq \varphi3/\nu3 \leq 0.0500$$

f, f1, $\phi$1, v1, f2, $\phi$2, n2, f3, $\phi$3, n3, and v3 are as defined above.

The expressions (I) and (IV) each define the ratio of the focal length of the first lens 101 or the third lens 103 to the focal length of the entire system of the aspheric lenses 100. The ratio of the focal length of the second lens 102 to the focal length of the entire system of the aspheric lenses 100 will be mentioned later and may be adjusted such that a desired focal length f of the entire system is obtained in the aspheric lenses 100 in a range that satisfies the expressions (I) to (VI).

f1/f may be -9.00 or more, -8.50 or more, -3.00 or more, -2.30 or more, -1.40 or more, -0.50 or more, 1.50 or more, 2.80 or more, or 5.00 or more in the range of the expression (I). f1/f may be 6.00 or less, 5.60 or less, 5.00 or less, 3.20 or less, 0.50 or less, -0.20 or less, -0.40 or less, -1.00 or less, -1.50 or less, -2.10 or less, or - 7.00 or less in the range of the expression (I).

f3/f may be -70.0 or more, -67.0 or more, -30.0 or more, -15.0 or more, -7.20 or more, -5.10 or more, 0.50 or more, 1.25 or more, 10.0 or more, 15.0 or more, or 18.0 or more in the range of the expression (IV). f3/f may be 25.0 or less, 20.0 or less, 10.0 or less, 3.00 or less, 2.00 or less, 1.50 or less, 1.05 or less, -3.00 or less, - 7.00 or less, -25.0 or less, -60.0 or less, or -65.0 or less in the range of the expression (IV).

Each value of f, f1, and f3 is not particularly limited because the value can be appropriately adjusted by so-called scaling, which changes the size of the optical system while maintaining the relationship of each configuration of the aspheric lenses 100. f may be, for example, 1.10 mm or more and 10.0 mm or less, may be 1.50 mm or more and 8.00 mm or less, or may be 2.00 mm or more and 5.00 mm or less. Provided that f is set, f1 and f3 are designed so as to satisfy the expressions (I) and (IV), respectively.

The magnification ratio $\beta$ of the aspheric lenses 100 is preferably larger than 1.00, more preferably 1.10 or more, further preferably 1.20 or more. The focal length f of the aspheric lenses 100 may be appropriately adjusted such that $\beta$ falls within the range described above, depending on a value such as the focal length $f_{400}$ of the imaging lens.

The expressions (II) and (VI) each define a value of the ratio of the power to the Abbe number of each lens normalized with the power (1/f) of the aspheric lenses 100 as to the first lens 101 and the third lens 103.

$\phi1/\nu1$ may be -0.1500 or more, -0.0900 or more, -0.0500 or more, -0.0350 or more, -0.0200 or more, -0.0065 or more, 0.0030 or more, 0.0050 or more, or 0.0090 or more in the range of the expression (II). $\phi1/\nu1$ may be 0.0200 or less, 0.0150 or less, 0.0080 or less, 0.0060 or less, -0.0055 or less, -0.0150 or less, -0.0300 or less, -0.0700 or less, or -0.0800 or less in the range of the expression (II).

$\phi3/\nu3$ may be -0.0120 or more, -0.0090 or more, -0.0060 or more, -0.0010 or more, 0.0010 or more, 0.0020 or more, 0.0080 or more, 0.0120 or more, or 0.0170 or more in the range of the expression (VI). $\phi3/\nu3$ may be 0.0200 or less, 0.0180 or less, 0.0140 or less, 0.0040 or less, 0.0025 or less, -0.0005 or less, -0.0040 or less, - 0.0055 or less, or -0.0080 or less in the range of the expression (VI).

The value of v1 is not particularly limited as long as $\phi1/\nu1$ satisfies the expression (II). The value may be, for example, 10 or more and 100 or less and is preferably 15 or more and 90 or less, more preferably 18 or more and 70 or less, further preferably 19 or more and 60 or less.

The value of v3 is not particularly limited as long as $\phi3/\nu3$ satisfies the expression (VI). The value may be, for example, 10 or more and 100 or less and is preferably 15 or more and 90 or less, more preferably 18 or more and 75 or less, further preferably 19 or more and 70 or less, further more preferably 22 or more and 60 or less.

The magnitude relationship between v1 and v3 is not particularly limited, and v1 may be larger, or v3 may be larger. The absolute value of the difference between v1 and v3 is more preferably larger by 10 or more or 20 or more. In this case, the upper limit value of the absolute value of the difference between v1 and v3 is not particularly limited and may be, for example, 100, 80, 60, 50, or 40.

The expressions (III) and (V) each define a value of the ratio of the power to the refractive index of each lens normalized with the power (1/f) of the aspheric lens 100 as to the second lens 102 and the third lens 103.

$\phi2/n2$ may be 0.150 or more, 0.200 or more, 0.380 or more, 0.500 or more, 0.600 or more, 0.800 or more, or 0.950 or more in the range of the expression (III). $\phi2/n2$ may be 1.500 or less, 1.100 or less, 0.700 or less, 0.450 or less, 0.300 or less, or 0.250 or less in the range of the expression (III).

$\phi3/n3$ may be -0.250 or more, -0.170 or more, -0.120 or more, -0.090 or more, -0.030 or more, -0.010 or more, 0.010 or more, 0.030 or more, 0.200 or more, 0.300 or more, 0.480 or more, or 0.620 or more in the range of the expression (V). $\phi3/n3$ may be 0.800 or less, 0.640 or less, 0.500 or less, 0.100 or less, 0.040 or less, - 0.005 or less, -0.060 or less, -0.080 or less, or -0.110 or less in the range of the expression (V).

The value of n2 is not particularly limited as long as $\phi2/n2$ satisfies the expression (III). The value may be, for example, 1.20 or more and 2.00 or less and is preferably 1.30 or more and 1.80 or less, more preferably 1.40 or more and 1.75 or less, further preferably 1.45 or more and 1.75 or less, still further preferably 1.50 or more and 1.70 or less.

The value of n3 is not particularly limited as long as $\phi3/n3$ satisfies the expression (V). The value may be, for example, 1.20 or more and 2.00 or less and is preferably 1.30 or more and 1.80 or less, more preferably 1.40 or more and 1.75 or less, further preferably 1.45 or more and 1.75 or less, still further preferably 1.50 or more and 1.70 or less.

The magnitude relationship between n2 and n3 is not particularly limited, and n2 may be larger, or n3 may be larger. The absolute value of the difference between n2 and n3 may be larger by 0.03 or more, 0.05 or more, or 0.07 or more. In this case, the upper limit value of the absolute value of the difference between n2 and n3 is not particularly limited and may be, for example, 0.50, 0.40, 0.30, 0.20, or 0.10.

The aspheric lenses 100 preferably further satisfy the following expressions (VII) and (VIII):

$$\text{(VII)} \quad 0.000 \leq P \leq 0.800$$

$$(VIII)\ -0.0600 \leq Q \leq 0.0500$$

P, Q, n1, and v2 are as defined above.

P in the expression (VII) is a value corresponding to the Petzval sum. In the aspheric lenses 100, the first lens 101, the second lens 102, and the third lens 103 are aspheric lenses. Therefore, high flatness is achieved for the whole optical system when the second lens 102 and the third lens 103 satisfy the expressions (III) and (V), respectively. When P satisfies the expressions (VII), higher flatness can be achieved for the whole optical system.

P may be 0.050 or more, 0.160 or more, 0.200 or more, 0.250 or more, 0.400 or more, 0.550 or more, 0.570 or more, or 0.650 or more in the range of the expression (VII). P is preferably 0.680 or less and may be 0.600 or less, 0.570 or less, 0.480 or less, 0.280 or less, or 0.230 or less in the range of the expression (VII).

Q in the expression (VIII) is a value related mainly to chromatic aberration of the aspheric lenses 100. In the aspheric lenses 100, the first lens 101, the second lens 102, and the third lens 103 are aspheric lenses. Therefore, chromatic aberration is suppressed for the whole optical system when the first lens 101 and the third lens 103 satisfy the expressions (II) and (VI), respectively. When Q satisfies the expressions (VIII), chromatic aberration can be more reduced for the whole optical system.

Q is preferably -0.0450 or more, more preferably -0.0300 or more, and may be -0.0110 or more, -0.0050 or more, 0.0100 or more, 0.0200 or more, or 0.0215 or more in the range of the expression (VIII). Q is preferably 0.0400 or less, more preferably 0.0250 or less, and may be 0.0220 or less, 0.0120 or less, -0.0030 or less, -0.0095 or less, -0.0280, or -0.0430 or less in the range of the expression (VIII).

The aspheric lenses 100 may satisfy the following expressions (II-A), (III-A), (V-A), (VI-A), (VII-A), and (VIII-A) instead of the expressions (II), (III), (V), (VI), (VII), and (VIII).

$$(II\text{-}A)\ -0.0400 \leq 1/f1v1 \leq 0.0100$$

$$(III\text{-}A)\ 0.050 \leq 1/f2n2 \leq 0.400$$

$$(V\text{-}A)\ -0.100 \leq 1/f3n3 \leq 0.300$$

$$(VI\text{-}A)\ -0.0080 \leq 1/f3v3 \leq 0.0100$$

$$(VII\text{-}A)\ 0.000 \leq P' \leq 0.650$$

$$(VIII\text{-}A)\ -0.0200 \leq Q' \leq 0.0200$$

P' and Q' are as defined above.

1/f1v1 may be -0.0260 or more, -0.0110 or more, -0.0090 or more, -0.0020 or more, or 0.0030 or more in the range of the expression (II-A). 1/f1v1 may be 0.0040 or less, 0.0035 or less, -0.0010 or less, -0.0080 or less, -0.0100 or less, or -0.0240 or less in the range of the expression (II-A).

1/f2n2 may be 0.100 or more, 0.120 or more, 0.160 or more, 0.250 or more, 0.280 or more, or 0.300 or more in the range of the expression (III-A). 1/f2n2 may be 0.330 or less, 0.300 or less, 0.270 or less, 0.180 or less, 0.140 or less, or 0.120 or less in the range of the expression (III-A).

1/f3n3 may be -0.060 or more, -0.040 or more, -0.010 or more, 0.015 or more, 0.130 or more, or 0.190 or more in the range of the expression (V-A). 1/f3n3 may be 0.210 or less, 0.150 or less, 0.030 or less, -0.001 or less, -0.030 or less, or -0.050 or less in the range of the expression (V-A).

1/f3v3 may be -0.0042 or more, -0.0025 or more, -0.0005 or more, 0.0010 or more, 0.0040 or more, or 0.0050 or more in the range of the expression (VI-A). 1/f3v3 may be 0.0060 or less, 0.0045 or less, 0.0015 or less, -0.0001 or less, -0.0020 or less, or -0.0050 or less in the range of the expression (VI-A).

P' may be 0.020 or more, 0.030 or more, 0.070 or more, 0.100 or more, 0.150 or more, 0.180 or more, or 0.200 or more in the range of the expression (VII-A). P' is preferably 0.500 or less, more preferably 0.300 or less, and may be 0.250 or less, 0.190 or less, 0.160 or less, or 0.110 or less in the range of the expression (VII-A).

Q' is preferably -0.0140 or more and may be -0.0050 or more, -0.0010 or more, 0.0000, 0.0030, or 0.0080 or more in the range of the expression (VIII-A). Q' is preferably 0.0140 or less and may be 0.0090 or less, 0.0040 or less, 0.0000 or less, or -0.0045 or less in the range of the expression (VIII-A).

The aspheric lenses 100 preferably further satisfy the expressions (XI), (X), and (XI) given below. The aspheric lenses 100 preferably satisfy the following expressions (IX), (X), and (XI) in addition to the expressions (I) to (VI) and more preferably satisfy the following expressions(IX), (X), and (XI) in addition to the expressions (I) to (VIII).

$$(IX)\ -1.500 \leq \varphi1/n1 \leq 0.300$$

$$(X)\ 0.500 \leq f2/f \leq 3.50$$

$$(XI)\ 0.0050 \leq \varphi2/\nu2 \leq 0.0400$$

n1 and v2 are defined as mentioned above.

Since the aspheric lenses 100 satisfy the expressions (I) to (VI), the aspheric lenses do not deteriorate the whole optical performance even when mounted to an existing imaging lens, and enables a fine target object to be observed with high resolution. The aspheric lenses 100 further satisfy the expressions (IX) to (XI) and can thereby further suppress deterioration in the flatness of an image obtained in the imaging apparatus 400 and chromatic aberration.

$\phi1/n1$ may be -1.260 or more, -0.600 or more, -0.500 or more, -0.350 or more, -0.280 or more, -0.080 or more, 0.050 or more, 0.100 or more, or 0.200 or more in the range of the expression (IX). $\phi1/n1$ may be 0.220 or less, 0.150 or less, 0.110 or less, -0.060 or less, -0.150 or less, -0.250 or less, -0.300 or less, -0.450 or less, - 0.900 or less, or -1.200 or less in the range of the expression (IX).

The value of n1 is not particularly limited. The value may be, for example, 1.10 or more and 2.00 or less and is preferably 1.20 or more and 1.90 or less, more preferably 1.30 or more and 1.80 or less, further preferably 1.40 or more and 1.70 or less. The magnitude relationship among n1, n2, and n3 is not particularly limited, and n1 may be larger than n2, or n1 may be smaller than n2. The absolute value of the difference between n1 and n2 may be larger by 0.03 or more, 0.05 or more, or 0.07 or more. In this case, the upper limit value of the absolute value of the difference between n1 and n2 is not particularly limited and may be, for example, 0.50, 0.40, 0.30, 0.20, or 0.15. n3 may be the same as n1, n1 may be larger than n3, or n1 may be smaller than n3.

f2/f may be 0.600 or more, 0.900 or more, 1.00 or more, 1.60 or more, 2.00 or more, or 2.70 or more in the range of the expression (X). f2/f may be 3.00 or less, 2.20 or less, 1.70 or less, 1.10 or less, 1.00 or less, or 0.700 or less in the range of the expression (X). The value of f2 is not particularly limited because the value can be appropriately adjusted by the scaling of the aspheric lenses 100.

$\phi2/\nu2$ may be 0.0100 or more, 0.0140 or more, 0.0160 or more, 0.0170 or more, 0.0180 or more, 0.0200 or more, or 0.0270 or more in the range of the expression (XI). $\phi2/\nu2$ may be 0.0280 or less, 0.0200 or less, 0.0190 or less, 0.0180 or less, 0.0170 or less, 0.0155 or less, or 0.0120 or less in the range of the expression (XI).

The value of v2 is not particularly limited. The value may be, for example, 10 or more and 100 or less and is preferably 15 or more and 80 or less, more preferably 20 or more and 60 or less. The magnitude relationship among v1, v2, and v3 is not particularly limited, and v1 may be larger than v2, or v1 may be smaller than v2. The absolute value of the difference between v1 and v2 is more preferably larger by 10 or more or 20 or more. In this case, the upper limit value of the absolute value of the difference between v1 and v2 is not particularly limited and may be, for example, 100, 80, 60, 50, or 40. v3 may be the same as v2, v2 may be larger than v3, or v2 may be smaller than v3.

The aspheric lenses 100 may satisfy the following expressions (IX-A) and (XI-A) instead of the expressions (IX) and (XI).

$$(IX\text{-}A)\ -0.450 \leq 1/f1n1 \leq 0.200$$

$$(XI\text{-}A)\ 0.0015 \leq 1/f2\nu2 \leq 0.0150$$

1/f1n1 may be -0.380 or more, -0.160 or more, -0.140 or more, -0.030 or more, 0.030 or more, or 0.100 or more in the range of the expression (IX-A). 1/f1n1 may be 0.120 or less, 0.050 or less, -0.015 or less, -0.120 or less, -0.150 or less, or - 0.370 or less in the range of the expression (IX-A).

1/f2v2 may be 0.0028 or more, 0.0035 or more, 0.0045 or more, 0.0070 or more, 0.0080 or more, or 0.0083 or more in the range of the expression (XI-A). 1/f2v2 may be 0.0090 or less, 0.0080 or less, 0.0075 or less, 0.0050 or less, or 0.0030 or less in the range of the expression (XI-A).

In this embodiment, a material constituting each of the first lens 101, the second lens 102, and the third lens 103 is not particularly limited and may be, for example, an inorganic material such as glass, may be an organic material such as a resin, or may be a composite material of inorganic and organic materials combined.

In this embodiment, each of the first lens 101, the second lens 102, and the third lens 103 is preferably formed of a non-fluorescent material. According to this aspect, in the analysis device 10, the aspheric lenses can prevent fluorescence from being generated by the lenses themselves due to light from the light source 500 or luminescence from an analyte-containing sample in the microchamber device 300 and from becoming noise in measurement.

In this embodiment, when each of the first lens 101, the second lens 102, and the third lens 103 is formed of a non-fluorescent material, the aspheric lenses 100 preferably satisfy the expressions (I'), (II'), (III'), (IV'), (V'), and (VI') given below, more preferably further satisfy either the expressions (VII') and (VIII') given below or the expressions (IX'), (X'), and (XI') given below, and further preferably further satisfy the expressions (VII'), (VIII'), (IX'), (X'), and (XI') given below. According to this aspect, the aspheric lenses can prevent luminescence of the lenses themselves and in addition, can further suppress deterioration in the flatness of an image obtained in the imaging apparatus 400 and chromatic aberration.

$$(I') \ -8.50 \le f1/f \le 5.60$$

$$(II') \ -0.0900 \le \varphi1/\nu1 \le 0.0150$$

$$(III') \ 0.200 \le \varphi2/n2 \le 1.100$$

$$(IV') \ -67.0 \le f3/f \le 20.0$$

$$(V') \ -0.170 \le \varphi3/n3 \le 0.640$$

$$(VI') \ -0.0090 \le \varphi3/\nu3 \le 0.0180$$

$$(VII') \ 0.000 \le P \le 0.680$$

$$(VIII') \ -0.0450 \le Q \le 0.0250$$

$$(IX') \ -1.260 \le \varphi1/n1 \le 0.220$$

$$(X') \ 0.630 \le f2/f \le 2.85$$

$$(XI') \ 0.0100 \le \varphi2/\nu2 \le 0.0285$$

f, f1, f2, f3, n1, n2, n3, ν1, ν2, ν3, ϕ1, ϕ2, ϕ3, P, and Q are defined as mentioned above.

In this aspect, the aspheric lenses 100 may satisfy the following expressions (II-A'), (III-A'), (V-A'), (VI-A'), (VII-A'), (VIII-A'), (IX-A'), and (XI-A') instead of the expressions (II'), (III'), (V'), (VI'), (VII'), (VIII'), (IX'), and (XI').

$$(II-A') \ -0.0260 \le 1/f1\nu1 \le 0.0040$$

$$(III-A') \ 0.100 \le 1/f2n2 \le 0.330$$

$$(V-A') \ -0.060 \le 1/f3n3 \le 0.210$$

$$(VI-A') \ -0.0042 \le 1/f3\nu3 \le 0.0060$$

$$(VII-A') \ 0.020 \le P' \le 0.500$$

$$\text{(VIII-A') } -0.0140 \leq Q' \leq 0.0140$$

$$\text{(IX-A') } -0.380 \leq 1/f1n1 \leq 0.120$$

$$\text{(XI-A') } 0.0028 \leq 1/f2\nu2 \leq 0.0090$$

P' and Q' are defined as mentioned above.

In the expressions (I') to (XI'), the values of f1/f, φ1/n1, φ1/v1, f2/f, φ2/n2, φ2/v2, P, Q, f3/f, φ3/n3, φ3/v3, f, n1, n2, n3, v1, v2, and v3 may fall within ranges obtained by arbitrarily combining the upper limit values and the lower limit values listed in the expressions (I) to (XI), in the ranges of the expressions (I') to (XI'). In the expressions (II-A'), (III-A'), (V-A'), (VI-A'), (VII-A'), (VIII-A'), (IX-A'), and (XI-A'), the values of 1/f1n1, 1/f1v1, 1/f2n2, 1/f2v2, P', Q', 1/f3n3, and 1/f3v3 may fall within ranges obtained by arbitrarily combining the upper limit values and the lower limit values listed in the expressions (II-A), (III-A), (V-A), (VI-A), (VII-A), (VIII-A), (IX-A), and (XI-A).

The expressions (I') to (XI') and (II-A'), (III-A'), (V-A'), (VI-A'), (VII-A'), (VIII-A'), (IX-A'), and (XI-A') are expressions that further limit the numerical ranges of the expressions (I) to (XI) and (II-A), (III-A), (V-A), (VI-A), (VII-A), (VIII-A), (IX-A), and (XI-A). When each of the first lens 101, the second lens 102, and the third lens 103 is formed of a non-fluorescent material, the refractive index, the Abbe number, and the shape of each lens may be limited to some extent. When the numerical ranges of the expressions (I) to (XI) are limited to the ranges of the expressions (I') to (XI') and (II-A'), (III-A'), (V-A'), (VI-A'), (VII-A'), (VIII-A'), (IX-A'), and (XI-A'), the resulting aspheric lenses can further suppress deterioration in the flatness of an image obtained in the imaging apparatus 400 and chromatic aberration.

In one aspect of the attachment lens of the present embodiment, the expressions (I) to (VI) and (IX) to (XI) may be the following expressions (I-1) to (VI-1) and (IX-1) to (XI-1):

$$\text{(I-1) } -10.0 \leq f1/f \leq -7.00$$

$$\text{(II-1) } -0.0200 \leq \varphi1/\nu1 \leq -0.0055$$

$$\text{(III-1) } 0.600 \leq \varphi2/n2 \leq 1.100$$

$$\text{(IV-1) } -80.0 \leq f3/f \leq -60.0$$

$$\text{(V-1) } -0.030 \leq \varphi3/n3 \leq -0.005$$

$$\text{(VI-1) } -0.0060 \leq \varphi3/\nu3 \leq -0.0005$$

$$\text{(IX-1) } -0.080 \leq \varphi1/n1 \leq -0.060$$

$$\text{(X-1) } 0.900 \leq f2/f \leq 1.10$$

$$\text{(XI-1) } 0.0140 \leq \varphi2/\nu2 \leq 0.0200$$

In one aspect of the attachment lens of the present embodiment, the expressions (I) to (VI) and (IX) to (XI) may be the following expressions (I-2) to (VI-2) and (IX-2) to (XI-2):

$$\text{(I-2) } 5.00 \leq f1/f \leq 6.00$$

$$\text{(II-2) } 0.0050 \leq \varphi1/\nu1 \leq 0.0150$$

$$(\text{III-2}) \ 0.600 \le \varphi2/n2 \le 0.700$$

$$(\text{IV-2}) \ \text{-}15.0 \le f3/f \le \text{-}3.00$$

$$(\text{V-2}) \ \text{-}0.120 \le \varphi3/n3 \le \text{-}0.060$$

$$(\text{VI-2}) \ \text{-}0.0090 \le \varphi3/\nu3 \le \text{-}0.0040$$

$$(\text{IX-2}) \ 0.050 \le \varphi1/n1 \le 0.150$$

$$(\text{X-2}) \ 0.900 \le f2/f \le 1.10$$

$$(\text{XI-2}) \ 0.0160 \le \varphi2/\nu2 \le 0.0200$$

In one aspect of the attachment lens of the present embodiment, the expressions (I) to (VI) and (IX) to (XI) may be the following expressions (I-3) to (VI-3) and (IX-3) to (XI-3):

$$(\text{I-3}) \ 1.50 \le f1/f \le 5.00$$

$$(\text{II-3}) \ 0.0030 \le \varphi1/\nu1 \le 0.0080$$

$$(\text{III-3}) \ 0.150 \le \varphi2/n2 \le 0.300$$

$$(\text{IV-3}) \ 15.0 \le f3/f \le 25.0$$

$$(\text{V-3}) \ 0.010 \le \varphi3/n3 \le 0.100$$

$$(\text{VI-3}) \ 0.0010 \le \varphi3/\nu3 \le 0.0040$$

$$(\text{IX-3}) \ 0.100 \le \varphi1/n1 \le 0.300$$

$$(\text{X-3}) \ 2.00 \le f2/f \le 3.50$$

$$(\text{XI-3}) \ 0.0100 \le \varphi2/\nu2 \le 0.0190$$

In one aspect of the attachment lens of the present embodiment, the expressions (I) to (VI) and (IX) to (XI) may be the following expressions (I-4) to (VI-4) and (IX-4) to (XI-4):

$$(\text{I-4}) \ \text{-}3.00 \le f1/f \le \text{-}1.50$$

$$(\text{II-4}) \ \text{-}0.0350 \le \varphi1/\nu1 \le \text{-}0.0055$$

$$(\text{III-4}) \ 0.500 \le \varphi2/n2 \le 0.700$$

$$\text{(IV-4) } -7.20 \leq f3/f \leq -3.00$$

$$\text{(V-4) } -0.170 \leq \varphi3/n3 \leq -0.080$$

$$\text{(VI-4) } -0.0120 \leq \varphi3/\nu3 \leq -0.0055$$

$$\text{(IX-4) } -0.350 \leq \varphi1/n1 \leq -0.150$$

$$\text{(X-4) } 0.900 \leq f2/f \leq 1.70$$

$$\text{(XI-4) } 0.0050 \leq \varphi2/\nu2 \leq 0.0200$$

In one aspect of the attachment lens of the present embodiment, the expressions (I) to (VI) and (IX) to (XI) may be the following expressions (I-5) to (VI-5) and (IX-5) to (XI-5):

$$\text{(I-5) } -2.30 \leq f1/f \leq -1.00$$

$$\text{(II-5) } -0.0500 \leq \varphi1/\nu1 \leq -0.0150$$

$$\text{(III-5) } 0.300 \leq \varphi2/n2 \leq 0.640$$

$$\text{(IV-5) } 0.50 \leq f3/f \leq 2.00$$

$$\text{(V-5) } 0.480 \leq \varphi3/n3 \leq 0.800$$

$$\text{(VI-5) } 0.0120 \leq \varphi3/\nu3 \leq 0.0500$$

$$\text{(IX-5) } -0.600 \leq \varphi1/n1 \leq -0.300$$

$$\text{(X-5) } 1.00 \leq f2/f \leq 2.20$$

$$\text{(XI-5) } 0.0050 \leq \varphi2/\nu2 \leq 0.170$$

In one aspect of the attachment lens of the present embodiment, the expressions (I) to (VI) and (IX) to (XI) may be the following expressions (I-6) to (VI-6) and (IX-6) to (XI-6):

$$\text{(I-6) } -1.40 \leq f1/f \leq -0.20$$

$$\text{(II-6) } -0.1500 \leq \varphi1/\nu1 \leq -0.0700$$

$$\text{(III-6) } 0.800 \leq \varphi2/n2 \leq 1.500$$

$$\text{(IV-6) } 0.50 \leq f3/f \leq 3.00$$

$$\text{(V-6)} \quad 0.300 \leq \varphi3/n3 \leq 0.640$$

$$\text{(VI-6)} \quad 0.0080 \leq \varphi3/\nu3 \leq 0.0200$$

$$\text{(IX-6)} \quad -1.500 \leq \varphi1/n1 \leq -0.900$$

$$\text{(X-6)} \quad 0.500 \leq f2/f \leq 1.00$$

$$\text{(XI-6)} \quad 0.0200 \leq \varphi2/\nu2 \leq 0.0400$$

The present embodiment is not limited by the aspects mentioned above, as a matter of course. In each expression of the above aspects, the values of f1/f, $\phi1/n1$, $\phi1/\nu1$, f2/f, $\phi2/n2$, $\phi2/\nu2$, f3/f, $\phi3/n3$, $\phi3/\nu3$, f, n1, n2, n3, $\nu1$, $\nu2$, and $\nu3$ may fall within ranges obtained by arbitrarily combining the upper limit values and the lower limit values listed in the expressions (I) to (XI), in the ranges of the above expressions.

The aspheric lenses 100 of this embodiment enable a fine target object to be observed with a wider field of view. A half angle of view, $\omega$, of the aspheric lenses 100 of this embodiment is preferably 15 degrees or more, more preferably 20 degrees or more, further preferably 30 degrees or more, and may be 40 degrees or more, 45 degrees or more, 50 degrees or more, or 55 degrees or more. The upper limit value of the half angle of view, $\omega$, is not particularly limited and may be, for example, 70 degrees, 65 degrees, or 60 degrees.

[Second embodiment]

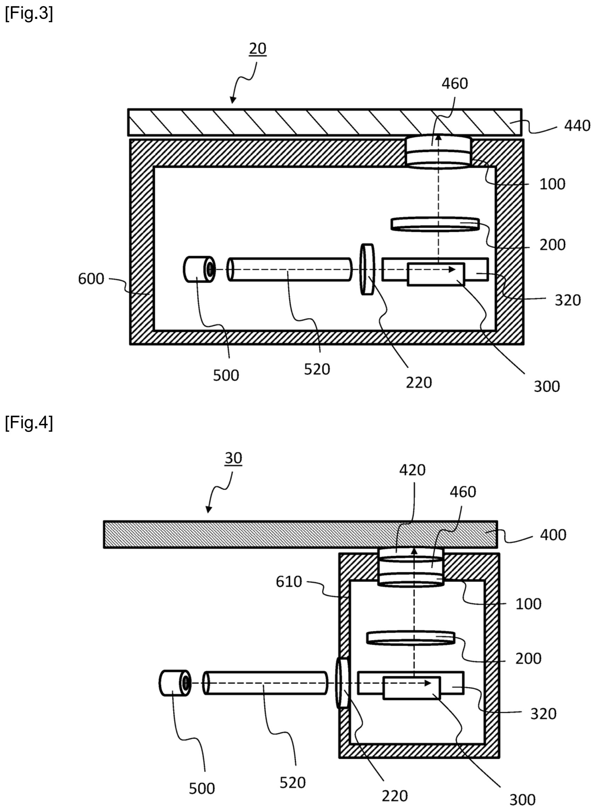

Figure 3 is a schematic cross-sectional view of an analysis device 20 of the present embodiment different from the first embodiment. As shown in Figure 3, the analysis device 20 compared with the analysis device 10 shown in Figure 1 differs in that the analysis device comprises an imaging apparatus holder 440 instead of the imaging apparatus 400.

The analysis device 20 is used upon analysis by mounting an imaging apparatus in the imaging apparatus holder 440 such that the imaging lens is inserted to the hole 460 or the hole 460 is covered with the imaging lens. The other configurations may be the same as those of the first embodiment or its modified form.

[Third embodiment]

Figure 4 is a schematic cross-sectional view of an analysis device 30 of the present embodiment different from the first embodiment. As shown in Figure 4, the analysis device 30 compared with the analysis device 10 shown in Figure 1 differs in that the analysis device comprises a light-shielding unit 610 that accommodates the microchamber device 300, the device holder 320, the aspheric lenses 100, and the first optical filter 200 instead of the light-shielding unit 600.

In Figure 4, the light source 500 and the waveguide 520 are disposed outside the light-shielding unit 610, and the second optical filter 220 is embedded in the light-shielding unit 610. Light emitted from the light source 500 is led to the second optical filter 220 through the waveguide 520 and filtered by the second optical filter 220 to irradiate the microchamber device 300. A sealing unit for sealing a gap from the light-shielding unit 610 may be disposed in the neighborhood of the second optical filter 220. Examples of the sealing unit include members made of resins (e.g., rubber rings) and adhesives.

The second optical filter 220 may be installed outside or inside the light-shielding unit 610 so as to cover the hole disposed in the light-shielding unit 610. The other configurations may be the same as those of the first embodiment or the second embodiment or their modified forms.

[Modified form]

The present embodiments described above are illustrations for describing the present invention and do not intend to limit the present invention to these present embodiments. The present invention can be variously modified without departing from the spirit of the present invention.

For example, in Figures 1, 3, and 4, the light-shielding unit 600 is configured to surround each configuration on four sides so as to prevent stray light in a region other than the hole 460. The light-shielding unit 600 may lack an upper surface, i.e., a surface or a portion where the hole 460 is disposed. In this aspect, the entrance of stray light into the light-shielding unit 600 is prevented by covering an opening of the light-shielding unit 600 with the imaging apparatus 400 or the imaging apparatus holder 440.

Thus, examples of the light-shielding unit in the analysis device of the present embodiment include: a form that is capable of accommodating, in the inside, at least the microchamber device and the device holder, the first optical filter, and the aspheric lenses, and has a hole capable of placing the imaging lens of the imaging apparatus at a position that enables the microchamber device to be imaged via the first optical filter and the aspheric lenses; a form that is capable of accommodating, in the inside, at least the microchamber device and the device holder, and the first optical filter, and has a hole capable of placing the imaging lens of the imaging apparatus at a position that enables the microchamber device to be imaged via the first optical filter and the aspheric lenses, wherein the aspheric lenses are disposed in the hole; a form that is capable of accommodating, in the inside, at least the microchamber device and the device holder, and has a hole capable of placing the imaging lens of the imaging apparatus at a position that enables the microchamber device to be imaged via the first optical filter and the aspheric lenses, wherein the aspheric lenses and the first optical filter are disposed in the hole; a form that is capable of accommodating, in the inside, at least the microchamber device and the device holder, the first optical filter, and the aspheric lenses, and is configured to partially open and be capable of sealing the opening by installing the imaging apparatus in the opening so as not to permit entrance of outside light to the inside; and a form that is capable of accommodating, in the inside, at least the microchamber device and the device holder, and the first optical filter, and is configured to partially open and be capable of sealing the opening by installing the imaging apparatus with the aspheric lenses attached to the front surface of the imaging lens in the opening so as not to permit entrance of outside light to the inside. In these forms, at least one or more of other optical elements such as the light source, the second optical filter, and the waveguide and the lens that may be placed between the light source and the microchamber device may be placed inside the light-shielding unit. The light-shielding unit may be provided with an openable and closable outlet for taking out each configuration accommodated in the inside. A sealing unit such as a member made of a resin (e.g., a rubber ring) or an adhesive may be disposed at the end of the opening described above.

In Figures 1, 3, and 4, the waveguide 520 and the second optical filter 220 are not essential configurations, and the microchamber device 300 may be irradiated with light directly from the light source 500. In Figures 1, 3, and 4, the configuration may be flipped vertically such that the imaging apparatus 400 or the imaging apparatus holder 440 is positioned on the lower side. In this case, the microchamber device 300 may be configured such that the first surface is positioned on the lower side and the lid portion is omitted.

[Analysis method]

The analysis device 10 shown in Figure 1 can conduct analysis by: introducing an analyte-containing sample to the microchamber device 300; irradiating the sample with excitation light corresponding to a compound contained in the sample from the light source 500; and imaging the microchamber device 300 with the imaging apparatus 400 to thereby detect luminescence derived from the compound excited with the excitation light.

Thus, the analysis method of the present embodiment comprises: introducing an analyte-containing sample to the microchamber device of the analysis device; irradiating the sample with excitation light corresponding to a compound contained in the sample from the light source; and imaging the microchamber device with the imaging apparatus to thereby detect luminescence derived from the compound excited with the excitation light.

The analysis device 20 shown in Figure 3 can conduct analysis by: placing an imaging apparatus in the imaging apparatus holder 440; introducing an analyte-containing sample to the microchamber device 300; irradiating the sample with excitation light corresponding to a compound contained in the sample from the light source 500; and imaging the microchamber device 300 with the imaging apparatus to thereby detect luminescence derived from the compound excited with the excitation light.

Thus, the analysis method of the present embodiment may comprise: placing an imaging apparatus in the imaging apparatus holder; introducing an analyte-containing sample to the microchamber device of the analysis device; irradiating the sample with excitation light corresponding to a compound contained in the sample from the light source; and imaging the microchamber device with the imaging apparatus to thereby detect luminescence derived from the compound excited with the excitation light.

The substance to be analyzed with the analysis device 10 or 20 is not particularly limited and may be, for example, any of nucleic acids, proteins, sugars, lipids, and composites thereof, and viruses. The target substance is preferably any of nucleic acids, proteins, sugars, lipids, and composites thereof capable of serving as markers for various diseases or infections. The nucleic acids include natural nucleic acid such as DNA and RNA and artificial nucleic acids such as LNA and PNA and also include polymers thereof.

(Introduction of analyte-containing sample)

In the analysis method of the present embodiment, first, an analyte-containing sample is introduced to the microchamber device 300, optionally after an imaging apparatus is placed in the imaging apparatus holder 440. This introduction may be carried out before or after placement of the microchamber device 300 in the device holder 320. The analyte-containing sample may be introduced, for example, by adding an appropriate amount of the analyte-containing sample to the microchamber device 300 and then closing the opening of the microchamber device 300 with the lid portion.

When the microchamber device 300 has the bottom having a plate-like member and sidewalls having a hydrophobic upper surface, and a lid portion disposed opposed to the bottom, and a space composed of a flow path and wells is formed in the microchamber device 300, the analyte-containing sample may be introduced to the microchamber device 300 as mentioned below. Hereinafter, description will be made with appropriate reference to Figure 5.

First, a sample 308 containing an analyte 308a is introduced into the microchamber device 300. Figure 5 shows an example in which a chromogenic substrate 308b that changes the absorbance of the analyte 308a and/or generates fluorescence is introduced together with the analyte 308a.

The sample 308 contains an appropriate solvent for dissolving or suspending the analyte and the chromogenic substrate, and a solvent that is usually used for detecting, for example, any of nucleic acids, proteins, sugars, lipids, and composites thereof, and viruses may be used. Examples of such a solvent include water, alcohols, ether, ketone, nitrile-based solvents, dimethyl sulfoxide (DMSO), and N,N-dimethylformamide (DMF). Water is preferred.

The sample 308 containing the analyte and the chromogenic substrate may be injected from, for example, an inlet that is disposed in the lid portion 310 and connected to the inside of the microchamber device 300. An outlet through which the solvent and a gas are discharged may be connected on the other side of the inlet. The sample 308 introduced into the microchamber device 300 travels in the internal space of the microchamber device 300 through a capillary phenomenon so that the sample is filled into the microchamber device 300. The sample 308 containing the analyte 308a and the chromogenic substrate 308b is thereby introduced into the flow path 312 and each well 302.

When the sample 308 has a low concentration of the analyte, the resulting wells will include wells harboring only one molecule of the analyte and wells harboring no analyte. When the sample 308 has a higher concentration of the analyte, two or more molecules of the analyte may be introduced to each well.

On the other hand, the chromogenic substrate is preferably contained at a concentration sufficiently higher than that of the analyte in the sample 308. In this case, the chromogenic substrate is introduced to almost all the wells.

Next, a hydrophobic solution or a gas is introduced into the microchamber device 300. The hydrophobic solution or the gas is injected from the same or different inlet as or from that for the sample 308 and discharged from the same or different outlet as or from that for the sample 308.

The hydrophobic solution or the gas introduced into the microchamber device 300 travels in the microchamber device 300 while replacing the sample 308 filled in the flow path of the microchamber device 300 without replacing the sample 308 in the wells. Liquid droplets of the sample 308 having a defined volume are thereby formed in the wells. The analyte 308a is enclosed together with the chromogenic substrate 308b in some of the liquid droplets formed in the wells 302, by adjusting the concentration of the analyte in the sample 308.

(Irradiation with excitation light)

Next, the analyte-containing sample in the microchamber device 300 is irradiated with excitation light corresponding to a compound contained in the analyte-containing sample from the light source 500. When the analyte-containing sample contains, for example, a fluorescent material, the microchamber device 300 is irradiated with light having a wavelength corresponding to excitation light for the fluorescent material from the light source 500.

When the sample containing the analyte and the chromogenic substrate is introduced as the analyte-containing sample to the wells disposed on the first surface of the microchamber device 300, excitation light corresponding to a compound resulting from the reaction between the analyte and the chromogenic substrate may be used in irradiation. Examples of such a case include the case where the analyte is a substance having, on the surface or in the inside, an enzyme having substrate-cleaving activity against the chromogenic substrate, and the chromogenic substrate is a substance that is cleaved by the enzyme to liberate a reaction product as a chromophore. However, the chromogenic substrate may produce, after reaction with the enzyme, a reaction product having optical characteristics different from those before the reaction, and may be a substance whose absorbance or optical rotation is changed between before and after reaction, or a substance that exhibits fluorescence after reaction.

(Imaging of microchamber device)

Next, the microchamber device 300 is imaged with the imaging apparatus 400 to thereby detect luminescence derived from the compound excited by the irradiation with the excitation light described above.

When the sample containing the analyte and the chromogenic substrate is introduced as the analyte-containing sample to the wells disposed on the first surface of the microchamber device 300, the reaction between the analyte and the chromogenic substrate in the liquid droplets formed in the wells progresses only in the wells where the analyte and the chromogenic substrate coexist to produce a reaction product. In this context, provided that the capacity of the wells is very small as, for example, approximately 10 aL to 100 nL, luminescence with high intensity that permits detection in the imaging apparatus 400 is generated by irradiation with the excitation light because of a high concentration of the reaction product even if only several molecules of the reaction product are formed in the wells.

Thus, when the sample containing the analyte and the chromogenic substrate is introduced as the analyte-containing sample to the wells disposed on the first surface of the microchamber device 300, quantitative analysis can be performed at a single-molecule level.

(Analysis of image data)

The image data thus obtained may be analyzed with an information processor connected or integrated with the imaging apparatus 400. For example, the concentration of the analyte in the sample in the microchamber device 300 may be analyzed by measuring the luminance or lightness of the image data.

When the sample containing the analyte and the chromogenic substrate is introduced as the analyte-containing sample to the wells disposed on the first surface of the microchamber device 300, the concentration of the analyte in the sample may be analyzed by counting the number of wells that emit light responding to the excitation light among the plurality of wells imaged. The number of molecules of the analyte introduced to each well may be analyzed not only by counting the number of wells that emit light but by measuring the luminance or lightness of each well.

[Numerical Examples 1 to 5]

Hereinafter, Numerical Examples of the aspheric lenses 100 mentioned above will be described. However, the present invention is not limited by these examples. In Numerical Examples given below, the unit of a length is indicated in mm.

Figure 6 shows each parameter of the optical system. R1 to R10 denote in order a first principal surface of the microchamber device 300, a second principal surface of the microchamber device 300, a first principal surface of the first optical filter 200, a second principal surface of the first optical filter 200, a first principal surface of the first lens 101, a second principal surface of the first lens 101, a first principal surface of the second lens 102, a second principal surface of the second lens 102, a first principal surface of the third lens 103, and a second principal surface of the third lens 103. R11 denotes a placement position of the imaging lens. In this context, a plurality of wells are placed on the surface R1.

In Numerical Examples 1 to 5, the refractive index and the Abbe number of the microchamber device 300 were set to 1.531 and 56.0, respectively; the refractive index and the Abbe number of the first optical filter 200 were set to 1.523 and 54.5, respectively; and the refractive indexes and the Abbe numbers of the first to third lenses were set to the values described in Table 8 mentioned later.

Materials for use in the microchamber device, the first optical filter, and each lens are not particularly limited as long as the materials satisfy the physical property values described in Numerical Examples 1 to 5. For example, the refractive indexes and the Abbe numbers of the microchamber device 300, the first lens 101, and the third lens 103 are obtained from a cycloolefin polymer (COP) or the like. Examples of such a first lens 101 and a third lens 103 include ZEONEX manufactured by ZEON Corp. The refractive index and the Abbe number of the first optical filter 200 are obtained from a general commercially available UV cut filter or the like. The refractive index and the Abbe number of the second lens 102 are obtained from a commercially available lens or the like. Examples of such a second lens 102 include lupizeta manufactured by Mitsubishi Gas Chemical Co., Inc. At least Numerical Examples 1 and 3 are Numerical Examples in which all the lenses are formed of a non-fluorescent material.

Distances d1 to d10 in Numerical Examples 1 to 5 are shown in the table below.

[Table 1]

| Symbol | Numerical Example | | | | |
|--------|------|------|------|------|------|
|        | 1 | 2 | 3 | 4 | 5 |
| d1 | 0.700 | 0.700 | 0.700 | 0.700 | 0.700 |
| d2 | 0.201 | 0.285 | 0.201 | 0.201 | 0.297 |
| d3 | 0.300 | 0.300 | 0.300 | 0.300 | 0.300 |
| d4 | 0.260 | 0.267 | 0.263 | 0.260 | 0.221 |
| d5 | 0.333 | 0.329 | 0.341 | 0.343 | 0.331 |
| d6 | 0.100 | 0.050 | 0.100 | 0.100 | 0.050 |
| d7 | 0.351 | 0.434 | 0.361 | 0.357 | 0.404 |
| d8 | 0.223 | 0.168 | 0.216 | 0.222 | 0.186 |

(continued)

| Symbol | Numerical Example | | | | |
|---|---|---|---|---|---|
| | 1 | 2 | 3 | 4 | 5 |
| d9 | 0.615 | 0.633 | 0.634 | 0.636 | 0.644 |
| d10 | 0.750 | 0.750 | 0.750 | 0.750 | 0.750 |

In Numerical Examples 1 to 5, R1, R2, R3, and R4 were flat surfaces. R5, R6, R7, R8, R9, and R10 were aspheric surfaces, and each surface is represented by the aspheric surface function given below. In the following expression, the optical axis direction was denoted as z; a coordinate orthogonal to the optical axis was denoted as y; K represents a constant of the cone; R represents a curvature radius; and a04, a06, a08, a10, a12, a14, and a16 each represent an aspheric coefficient.

$$z = \frac{\frac{y^2}{R}}{1 + \sqrt{1 - (1+K)\left(\frac{y}{R}\right)^2}} + a04\,y^4 + a06\,y^6 + a08\,y^8 + a10\,y^{10} + a12\,y^{12} + a14\,y^{14} + a16\,y^{16}$$

In Numerical Examples 1 to 5, the constant K of the cone in the expression was set to 0, and the curvature radiuses R of the surfaces R5 to R10 were set to the values shown in the table below. A negative curvature radius means having a convex curvature on the right side of Figure 2.

[Table 2]

| Surface | Numerical Example | | | | |
|---|---|---|---|---|---|
| | 1 | 2 | 3 | 4 | 5 |
| R5 | -1.1112 | -1.0851 | -1.1292 | -1.1051 | -1.1012 |
| R6 | -0.9524 | -0.9141 | -0.9384 | -0.9333 | -0.9352 |
| R7 | 1.4980 | 1.5146 | 1.4391 | 1.4867 | 1.5147 |
| R8 | 0.8881 | 0.9058 | 0.8371 | 0.8832 | 0.9159 |
| R9 | 5.3077 | 6.7283 | 5.2504 | 5.1960 | 6.2701 |
| R10 | -1.1550 | -1.1416 | -1.1535 | -1.1603 | -1.1421 |

In Numerical Examples 1 to 5, the aspheric coefficients a04, a06, a08, a10, a12, a14, and a16 were set to the values shown in the table below. In the following table, "E±x" means "×10±x".

(Numerical Example 1)

[Table 3]

| Surface | a04 | a06 | a08 | a10 | a12 | a14 | a16 |
|---|---|---|---|---|---|---|---|
| R5 | -9.0281E-02 | 3.0236E+00 | -8.4098E+00 | 1.4159E+01 | -1.4167E+01 | 7.7844E+00 | -1.7568E+00 |
| R6 | 2.3028E-01 | 3.8235E+00 | -1.4851E+01 | 3.4927E+01 | -4.7784E+01 | 3.4558E+01 | -9.1546E+00 |
| R7 | -8.5309E-01 | 6.0069E+00 | -2.9840E+01 | 7.1459E+01 | -8.9975E+01 | 4.6565E+01 | 0 |
| R8 | -9.6787E-01 | 3.3564E+00 | -1.5325E+01 | 2.8205E+01 | -2.1022E+01 | 3.3297E+00 | 0 |
| R9 | 3.0419E-02 | 1.4406E+00 | -5.7943E+00 | 9.0428E+00 | -4.2368E+00 | 0 | 0 |
| R10 | 1.5952E-01 | -7.9355E-01 | 3.6597E+00 | -7.2314E+00 | 6.2143E+00 | 0 | 0 |

(Numerical Example 2)

[Table 4]

| Surface | a04 | a06 | a08 | a10 | a12 | a14 | a16 |
|---|---|---|---|---|---|---|---|
| R5 | -1.5839E-01 | 2.7847E+00 | -6.5932E+00 | 9.4790E+00 | -7.9026E+00 | 3.4786E+00 | -5.5237E+01 |
| R6 | -8.2397E-02 | 5.1457E+00 | -1.7934E+01 | 3.6639E+01 | -4.1589E+01 | 2.3320E+01 | -3.8588E+00 |
| R7 | -8.9791E-01 | 6.6428E+00 | -3.5032E+01 | 1.0127E+02 | -1.7628E+02 | 1.7015E+02 | -7.0712E+01 |
| R8 | -8.3563E-01 | 2.2730E+00 | -9.9604E+00 | 1.7677E+01 | -1.1843E+01 | -7.0435E-01 | 1.8235E+00 |
| R9 | 1.6600E-01 | 1.1176E-01 | 1.3338E+00 | -1.4270E+01 | 4.2974E+01 | -5.1919E+01 | 2.2789E+01 |
| R10 | 2.4384E-01 | -2.1330E+00 | 1.3545E+01 | -4.8241E+01 | 1.0103E+02 | -1.1324E+02 | 5.4211E+01 |

(Numerical Example 3)

[Table 5]

| Surface | a04 | a06 | a08 | a10 | a12 | a14 | a16 |
|---|---|---|---|---|---|---|---|
| R5 | -7.5905E-02 | 2.7784E+00 | -6.8769E+00 | 1.0033E+01 | -8.2933E+00 | 3.6187E+00 | -5.6775E-01 |
| R6 | 2.2777E-01 | 2.5952E+00 | -3.7276E+00 | -7.8881E+00 | 3.8187E+01 | -5.3254E+01 | 2.7097E+01 |
| R7 | -8.1002E-01 | 5.1219E+00 | -2.3392E+01 | 5.0932E+01 | -5.9532E+01 | 2.9958E+01 | 0 |
| R8 | -1.0557E+00 | 3.8270E+00 | -1.7550E+01 | 3.6024E+01 | -3.2733E+01 | 8.2741E+00 | 0 |
| R9 | 4.7712E-02 | 1.4760E+00 | -5.9400E+00 | 9.7658E+00 | -5.6090E+00 | 0 | 0 |
| R10 | 1.3776E-01 | -5.7804E-01 | 2.6062E+00 | -5.0639E+00 | 5.0785E+00 | 0 | 0 |

(Numerical Example 4)

[Table 6]

| Surface | a04 | a06 | a08 | a10 | a12 | a14 | a16 |
|---------|-----|-----|-----|-----|-----|-----|-----|
| R5 | -6.6367E-02 | 2.3462E+00 | -4.7389E+00 | 5.0378E+00 | -2.2445E+00 | -2.0893E-01 | 4.1170E-01 |
| R6 | 3.5497E-01 | 1.1914E+00 | 3.8931E+00 | -2.9906E+01 | 7.3205E+01 | -8.2789E+01 | 3.7193E+01 |
| R7 | -7.2965E-01 | 3.6104E+00 | -1.3029E+01 | 1.7863E+01 | -9.4083E+00 | 0 | 0 |
| R8 | -1.0432E+00 | 3.6890E+00 | -1.5909E+01 | 2.7272E+01 | -1.6966E+01 | 0 | 0 |
| R9 | -6.088E-04 | 1.7413E+00 | -7.1719E+00 | 1.1881E+01 | -6.3388E+00 | 0 | 0 |
| R10 | 1.3622E-01 | -4.7479E-01 | 2.1943E+00 | -4.1857E+00 | 3.9059E+00 | 0 | 0 |

(Numerical Example 5)

[Table 7]

| Surface | a04 | a06 | a08 | a10 | a12 | a14 | a16 |
|---------|-----|-----|-----|-----|-----|-----|-----|
| R5 | -2.4297E-01 | 3.5672E+00 | -9.0587E+00 | 1.3589E+01 | -1.1822E+01 | 5.4839E+00 | -9.8346E-01 |
| R6 | -1.0066E-01 | 5.8242E+00 | -1.9819E+01 | 3.7881E+01 | -3.8437E+01 | 1.6863E+01 | -3.2572E-01 |
| R7 | -9.4439E-01 | 7.2928E+00 | -3.7227E+01 | 1.0154E+02 | -1.6457E+02 | 1.4671E+02 | -5.6421E+01 |
| R8 | -9.9033E-01 | 4.1505E+00 | -2.0763E+01 | 4.9958E+01 | -6.4396E+01 | 4.3124E+01 | -1.2577E+01 |
| R9 | 9.6867E-02 | 9.5502E-01 | -3.3588E+00 | -6.8210E-01 | 2.1683E+01 | -3.5045E+01 | 1.7535E+01 |
| R10 | 2.1642E-01 | -1.7975E+00 | 1.2219E+01 | -4.6284E+01 | 1.0210E+02 | -1.1874E+02 | 5.7995E+01 |

Each parameter in Numerical Examples 1 to 5 was the value shown in the table below. The symbols in the following table are defined as mentioned above.

[Table 8]

| Numerical Example | f | f1 | f2 | f3 | n1 | v1 | n2 | v2 | n3 | v3 |
|---|---|---|---|---|---|---|---|---|---|---|
| 1 | 1.472 | 7.265 | -4.418 | 1.847 | 1.531 | 56.04 | 1.636 | 23.92 | 1.531 | 56.04 |
| 2 | 1.506 | 6.547 | -4.816 | 1.890 | 1.531 | 56.04 | 1.651 | 21.54 | 1.531 | 56.04 |
| 3 | 1.488 | 6.458 | -4.101 | 1.844 | 1.531 | 56.04 | 1.636 | 23.92 | 1.531 | 56.04 |
| 4 | 1.479 | 6.679 | -4.251 | 1.850 | 1.531 | 56.04 | 1.671 | 19.28 | 1.531 | 56.04 |
| 5 | 1.492 | 6.903 | -4.736 | 1.876 | 1.531 | 56.04 | 1.671 | 19.28 | 1.531 | 56.04 |

| Numerical Example | f1/f | f2/f | f3/f | φ1/n1 | φ2/n2 | φ3/n3 | P | φ1/v1 | φ2/v2 | φ3/v3 | Q |
|---|---|---|---|---|---|---|---|---|---|---|---|
| 1 | 4.94 | -3.00 | 1.26 | 0.132 | -0.204 | 0.520 | 0.449 | 0.0036 | -0.0139 | 0.0142 | 0.0039 |
| 2 | 4.35 | -3.20 | 1.26 | 0.150 | -0.189 | 0.520 | 0.481 | 0.0041 | -0.0145 | 0.0142 | 0.0038 |
| 3 | 4.34 | -2.76 | 1.24 | 0.151 | -0.222 | 0.527 | 0.456 | 0.0041 | -0.0152 | 0.0144 | 0.0033 |
| 4 | 4.52 | -2.87 | 1.25 | 0.145 | -0.208 | 0.522 | 0.459 | 0.0040 | -0.0181 | 0.0143 | 0.0002 |
| 5 | 4.63 | -3.17 | 1.26 | 0.141 | -0.188 | 0.520 | 0.472 | 0.0039 | -0.0163 | 0.0142 | 0.0017 |

| Numerical Example | 1/f1n1 | 1/f2n2 | 1/f3n3 | P' | 1/f1v1 | 1/f2v2 | 1/f3v3 | Q' |
|---|---|---|---|---|---|---|---|---|
| 1 | 0.090 | -0.138 | 0.354 | 0.305 | 0.0025 | -0.0095 | 0.0097 | 0.0027 |
| 2 | 0.100 | -0.126 | 0.345 | 0.319 | 0.0027 | -0.0096 | 0.0094 | 0.0025 |
| 3 | 0.101 | -0.149 | 0.354 | 0.306 | 0.0028 | -0.0102 | 0.0097 | 0.0022 |
| 4 | 0.098 | -0.141 | 0.353 | 0.310 | 0.0027 | -0.0122 | 0.0096 | 0.0001 |
| 5 | 0.095 | -0.126 | 0.348 | 0.317 | 0.0026 | -0.0110 | 0.0095 | 0.0011 |

The aspheric lens composed of the first lens 101, the second lens 102, and the third lens 103 in each Numerical Example had a focal length f, an effective F number, and a half angle of view, $\omega$, of the values shown in the table below as overall characteristics. These results demonstrated that the aspheric lens of Numerical Examples 1 to 5 does not deteriorate the whole optical performance and enables a fine target object to be observed with high resolution, even when mounted to an existing imaging lens.

[Table 9]

| Parameter | Numerical Example | | | | |
|---|---|---|---|---|---|
| | 1 | 2 | 3 | 4 | 5 |
| f | 1.471 | 1.506 | 1.488 | 1.479 | 1.492 |
| Effective F number | 2.290 | 2.275 | 2.599 | 2.342 | 2.277 |
| ω (°) | 23.627 | 20.014 | 20.212 | 20.339 | 22.064 |

[Numerical Examples 6 to 11]

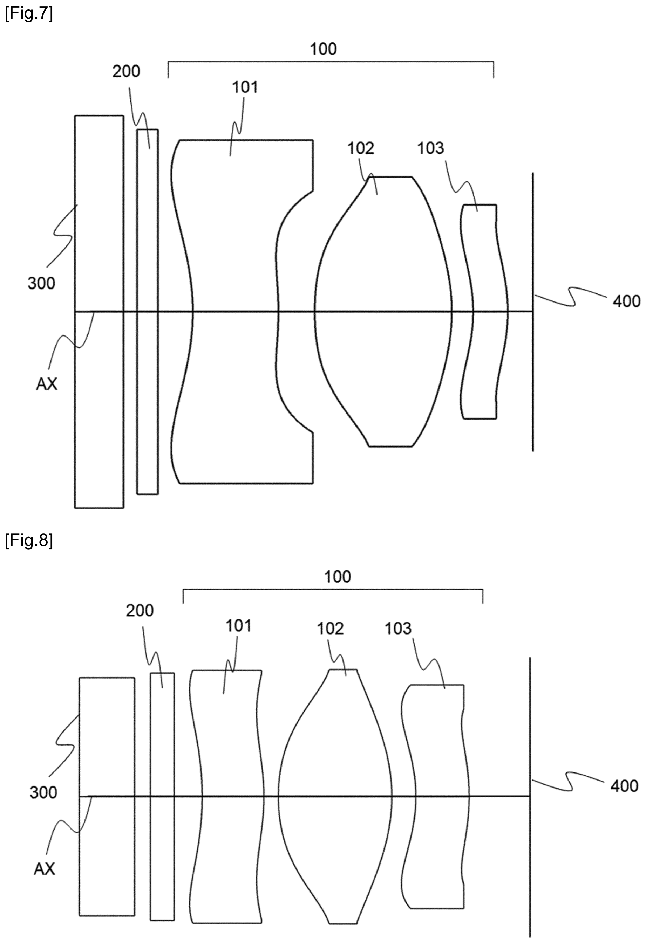

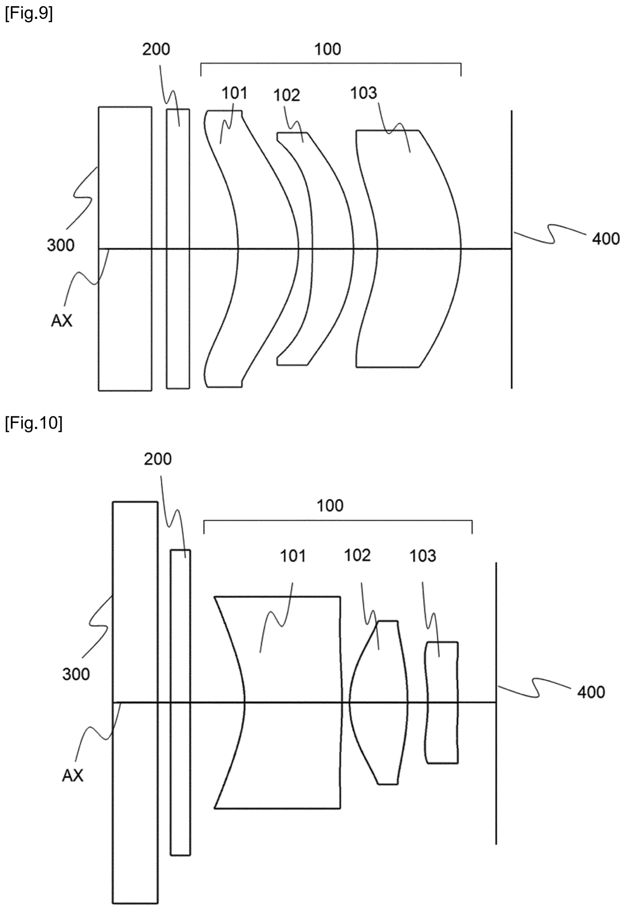

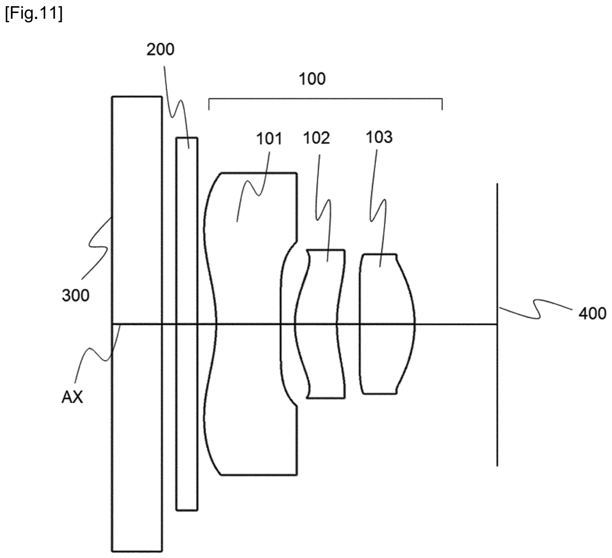

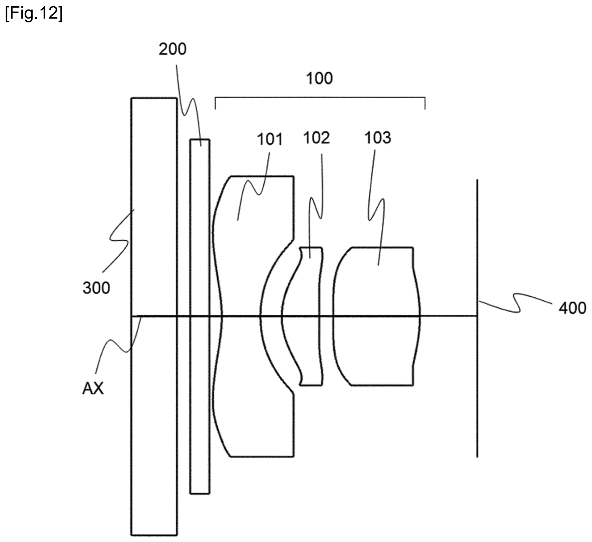

Figures 7 to 12 show schematic cross-sectional views of optical systems corresponding to Numerical Examples 6 to 11 given below. Each parameter of the optical systems is as shown in Figure 6, as in Numerical Examples 1 to 5 described above.

In Numerical Examples 6 to 11, the refractive index and the Abbe number of the microchamber device 300 were set to 1.531 and 56.0, respectively; the refractive index and the Abbe number of the first optical filter 200 were set to 1.523 and 54.5, respectively; and the refractive indexes and the Abbe numbers of the first to third lenses were set to the values described in Table 18 mentioned later.

Materials for use in the microchamber device, the first optical filter, and each lens are not particularly limited as long as the materials satisfy the physical property values described in Numerical Examples 6 to 11. For example, the refractive index of 1.531 and the Abbe number of 56.0 in the microchamber device 300 are obtained from a cycloolefin polymer (COP) or the like. Examples of the lens made of COP include ZEONEX manufactured by ZEON Corp. The refractive index and the Abbe number of the first optical filter 200 are obtained from a general commercially available UV cut filter or the like. The lenses having other refractive indexes and Abbe numbers are obtained from commercially available lenses or the like. Examples of such lenses include lupizeta manufactured by Mitsubishi Gas Chemical Co., Inc., OKP manufactured by Osaka Gas Chemicals Co., Ltd., APL manufactured by Mitsui Chemicals, Inc., and glass lenses (manufactured by Ohara, Inc., manufactured by SCHOTT, manufactured by Hoya Vision Care Company, and manufactured by Hikari Glass Co., Ltd.). Numerical Examples 6 to 11 are Numerical Examples in which all the lenses are formed of a non-fluorescent material.

Distances d1 to d10 in Numerical Examples 6 to 11 are shown in the table below.

[Table 10]

| Symbol | Numerical Example | | | | | |
|---|---|---|---|---|---|---|
| | 1 | 2 | 3 | 4 | 5 | 6 |
| d1 | 0.700 | 0.700 | 0.700 | 0.700 | 0.700 | 0.700 |
| d2 | 0.200 | 0.200 | 0.200 | 0.200 | 0.200 | 0.200 |
| d3 | 0.300 | 0.300 | 0.300 | 0.300 | 0.300 | 0.300 |
| d4 | 0.505 | 0.356 | 0.642 | 0.846 | 0.262 | 0.186 |
| d5 | 1.238 | 0.782 | 0.798 | 1.510 | 0.905 | 0.592 |
| d6 | 0.526 | 0.184 | 0.184 | 0.117 | 0.197 | 0.326 |
| d7 | 1.982 | 1.438 | 0.542 | 0.898 | 0.589 | 0.572 |
| d8 | 0.308 | 0.304 | 0.316 | 0.315 | 0.321 | 0.213 |
| d9 | 0.501 | 0.675 | 1.103 | 0.465 | 0.769 | 1.328 |
| d10 | 0.250 | 0.250 | 0.250 | 0.100 | 0.100 | 0.100 |

In Numerical Examples 6 to 11, R1, R2, R3, and R4 were flat surfaces. R5, R6, R7, R8, R9, and R10 were aspheric surfaces, and each surface is represented by the aspheric surface function given below. In the following expression, the optical axis direction was denoted as z; a coordinate orthogonal to the optical axis was denoted as y; K represents a constant of the cone; R represents a curvature radius; and a04, a06, a08, a10, a12, a14, and a16 each represent an aspheric coefficient.

$$z = \frac{\frac{y^2}{R}}{1 + \sqrt{1 - (1+K)\left(\frac{y}{R}\right)^2}} + a04\,y^4 + a06\,y^6 + a08\,y^8 + a10\,y^{10} + a12\,y^{12} + a14\,y^{14} + a16\,y^{16}$$

In Numerical Examples 6 to 11, the curvature radiuses R of the surfaces R5 to R10 were set to the values shown in the table below. A negative curvature radius means having a convex curvature on the right side of Figure 6.

[Table 11]

| Surface | Numerical Example | | | | | |
|---|---|---|---|---|---|---|
| | 1 | 2 | 3 | 4 | 5 | 6 |
| R5 | -3.7788 | -3.9271 | -2.8825 | -1.8930 | -2.4517 | -2.3901 |
| R6 | -5.1954 | -2.9422 | -1.5892 | -6.8006 | -73.5824 | 1.9726 |
| R7 | 4.2798 | 2.3817 | -11.2791 | 1.5924 | 1.3057 | 1.1825 |
| R8 | -3.1022 | -2.3483 | -2.6633 | -3.8827 | 2.1651 | -17.9985 |

(continued)

| Surface | Numerical Example | | | | | |
|---|---|---|---|---|---|---|
| | 1 | 2 | 3 | 4 | 5 | 6 |
| R9 | -2.5822 | -2.0744 | -1.9432 | -2.7583 | 78.4813 | 34.6512 |
| R10 | -2.8230 | -2.8849 | -2.1875 | -5.0719 | -1.7371 | -2.5200 |

In Numerical Examples 6 to 11, the constant K of the cone and the aspheric coefficients a04, a06, a08, a10, a12, a14, and a16 were set to the values shown in the table below. In the following table, "E±x" means "×10$^{\pm x}$".

(Numerical Example 6)

[Table 12]

| Surface | K | a04 | a06 | a08 | a10 | a12 | a14 | a16 |
|---|---|---|---|---|---|---|---|---|
| R5 | 0.0000 | 1.4041E-02 | 6.1114E-04 | 0 | 0 | 0 | 0 | 0 |
| R6 | -1.0000 | 6.6540E-02 | 1.0523E-03 | 0 | 0 | 0 | 0 | 0 |
| R7 | 0.0000 | 5.1570E-02 | -8.8561E-03 | 0 | 0 | 0 | 0 | 0 |
| R8 | -1.0000 | 2.3846E-02 | -4.1231E-03 | 0 | 0 | 0 | 0 | 0 |
| R9 | 0.0000 | 5.6351E-02 | 2.1406E-03 | 0 | 0 | 0 | 0 | 0 |
| R10 | 0.0000 | 4.2855E-02 | 5.2176E-03 | 0 | 0 | 0 | 0 | 0 |

(Numerical Example 7)

[Table 13]

| Surface | K | a04 | a06 | a08 | a10 | a12 | a14 | a16 |
|---|---|---|---|---|---|---|---|---|
| R5 | 0.0000 | 8.1401E-03 | 8.9932E-03 | 0 | 0 | 0 | 0 | 0 |
| R6 | -1.0000 | 9.1910E-02 | -1.1839E-02 | 0 | 0 | 0 | 0 | 0 |
| R7 | 0.0000 | 6.1022E-02 | -2.3602E-02 | 0 | 0 | 0 | 0 | 0 |
| R8 | -1.0000 | 1.8146E-02 | 2.5718E-05 | 0 | 0 | 0 | 0 | 0 |
| R9 | 0.0000 | 5.7440E-02 | 2.7915E-02 | 0 | 0 | 0 | 0 | 0 |
| R10 | 0.0000 | 3.9900E-02 | 4.4084E-02 | 0 | 0 | 0 | 0 | 0 |

(Numerical Example 8)

[Table 14]

| Surface | K | a04 | a06 | a08 | a10 | a12 | a14 | a16 |
|---|---|---|---|---|---|---|---|---|
| R5 | 0.0000 | -2.7575E-02 | 1.4219E-02 | 0 | 0 | 0 | 0 | 0 |
| R6 | -1.0000 | 2.5044E-02 | 5.5545E-04 | 0 | 0 | 0 | 0 | 0 |
| R7 | 0.0000 | -7.1724E-02 | -7.1257E-04 | 0 | 0 | 0 | 0 | 0 |
| R8 | -1.0000 | -5.5247E-02 | 1.3918E-02 | 0 | 0 | 0 | 0 | 0 |
| R9 | 0.0000 | 7.7874E-02 | 3.0478E-03 | 0 | 0 | 0 | 0 | 0 |

(continued)

| Surface | K | a04 | a06 | a08 | a10 | a12 | a14 | a16 |
|---------|------|-----------|-----------|-----|-----|-----|-----|-----|
| R10 | 0.0000 | 2.3985E-02 | 2.4542E-04 | 0 | 0 | 0 | 0 | 0 |

(Numerical Example 9)

[Table 15]

| Surface | K | a04 | a06 | a08 | a10 | a12 | a14 | a16 |
|---------|------|-----------|-----------|------------|-----|-----|-----|-----|
| R5 | 0.0000 | 9.4065E-02 | -2.2384E-02 | 4.8544.E-03 | 0 | 0 | 0 | 0 |
| R6 | -1.0000 | 6.6683E-02 | -3.0213E-02 | 5.7736.E-03 | 0 | 0 | 0 | 0 |
| R7 | 0.0000 | -1.4822E-02 | -4.0469E-02 | 3.8565.E-04 | 0 | 0 | 0 | 0 |
| R8 | -1.0000 | 1.4271E-03 | 1.6540E-02 | -3.4527.E-03 | 0 | 0 | 0 | 0 |
| R9 | 0.0000 | 1.5991E-01 | 3.4945E-02 | 0 | 0 | 0 | 0 | 0 |
| R10 | 0.0000 | 1.4392E-01 | 5.3116E-02 | 0 | 0 | 0 | 0 | 0 |

(Numerical Example 10)

[Table 16]

| Surface | K | a04 | a06 | a08 | a10 | a12 | a14 | a16 |
|---------|------|-----------|-----------|------------|------------|-----|-----|-----|
| R5 | 0.0000 | 8.0401E-02 | -3.4785E-03 | -1.4666.E-03 | 2.7592.E-04 | 0 | 0 | 0 |
| R6 | -1.0000 | -1.6770E-02 | 1.8244E-01 | -1.0873.E-01 | 2.8926.E-02 | 0 | 0 | 0 |
| R7 | 0.0000 | -2.6278E-01 | 1.5793E-01 | -1.5924.E-01 | 0 | 0 | 0 | 0 |
| R8 | -1.0000 | -1.2805E-01 | 3.0620E-03 | 3.5314.E-03 | 0 | 0 | 0 | 0 |
| R9 | 0.0000 | -5.3065E-02 | 8.7691E-02 | 0 | 0 | 0 | 0 | 0 |
| R10 | 0.0000 | 2.5628E-03 | 3.4624E-02 | 0 | 0 | 0 | 0 | 0 |

(Numerical Example 11)

[Table 17]

| Surface | K | a04 | a06 | a08 | a10 | a12 | a14 | a16 |
|---------|------|-----------|-----------|------------|------------|------------|-----|-----|
| R5 | 0.0000 | 1.6934E-01 | -9.2308E-02 | 3.5618. E-02 | -6.6159.E-03 | 4.7155.E-04 | 0 | 0 |
| R6 | -1.0000 | 8.2486E-02 | 3.0967E-02 | -1.9472.E-01 | 1.9606.E-01 | -6.0477.E-02 | 0 | 0 |
| R7 | 0.0000 | -1.6331E-01 | 1.1726E-01 | -1.8310.E-01 | -1.7695.E-02 | 0 | 0 | 0 |
| R8 | -1.0000 | 9.1149E-02 | 2.5621E-01 | -4.2312.E-01 | 1.5190.E-01 | 0 | 0 | 0 |
| R9 | 0.0000 | 1.4316E-01 | 1.9460E-02 | 0 | 0 | 0 | 0 | 0 |
| R10 | 0.0000 | 2.5385E-02 | 5.4533E-02 | 0 | 0 | 0 | 0 | 0 |

Each parameter in Numerical Examples 6 to 11 was the value shown in the table below. The symbols in the following table are defined as mentioned above.

[Table 18]

| Numerical Example | f | f1 | f2 | f3 | n1 | v1 | n2 | v2 | n3 | v3 |
|---|---|---|---|---|---|---|---|---|---|---|
| 1 | 3.748 | -31.807 | 3.646 | -248.859 | 1.671 | 19.28 | 1.545 | 55.93 | 1.636 | 23.92 |
| 2 | 2.401 | 13.251 | 2.431 | -17.162 | 1.671 | 19.28 | 1.545 | 55.93 | 1.636 | 23.92 |
| 3 | 1.870 | 5.758 | 5.320 | 36.223 | 1.509 | 56.32 | 1.640 | 23.50 | 1.636 | 23.92 |
| 4 | 2.060 | -4.684 | 2.201 | -10.311 | 1.636 | 23.92 | 1.545 | 56.00 | 1.636 | 23.92 |
| 5 | 3.066 | -4.007 | 5.004 | 3.132 | 1.636 | 23.92 | 1.531 | 55.75 | 1.545 | 56.00 |
| 6 | 3.282 | -1.614 | 2.097 | 4.370 | 1.636 | 23.92 | 1.535 | 56.07 | 1.545 | 55.99 |

| Numerical Example | f1/f | f2/f | f3/f | $\phi1/n1$ | $\phi2/n2$ | $\phi3/n3$ | P | $\phi1/v1$ | $\phi2/v2$ | $\phi3/v3$ | Q |
|---|---|---|---|---|---|---|---|---|---|---|---|
| 1 | -8.49 | 0.973 | -66.4 | -0.070 | 0.665 | -0.009 | 0.586 | -0.0061 | 0.0184 | -0.0006 | 0.0116 |
| 2 | 5.52 | 1.01 | -7.15 | 0.108 | 0.639 | -0.085 | 0.662 | 0.0094 | 0.0177 | -0.0058 | 0.0212 |
| 3 | 3.08 | 2.85 | 19.4 | 0.215 | 0.214 | 0.032 | 0.461 | 0.0058 | 0.0150 | 0.0022 | 0.0229 |
| 4 | -2.27 | 1.07 | -5.00 | -0.269 | 0.606 | -0.122 | 0.215 | -0.0184 | 0.0167 | -0.0084 | -0.0100 |
| 5 | -1.31 | 1.63 | 1.02 | -0.468 | 0.400 | 0.634 | 0.566 | -0.0320 | 0.0110 | 0.0175 | -0.0035 |
| 6 | -0.492 | 0.639 | 1.33 | -1.243 | 1.020 | 0.486 | 0.263 | -0.0850 | 0.0279 | 0.0134 | -0.0437 |

| Numerical Example | 1/f1n1 | 1/f2n2 | 1/f3n3 | P' | 1/f1v1 | 1/f2v2 | 1/f3v3 | Q' |
|---|---|---|---|---|---|---|---|---|
| 1 | -0.019 | 0.178 | -0.002 | 0.156 | -0.0016 | 0.0049 | -0.0002 | 0.0031 |
| 2 | 0.045 | 0.266 | -0.036 | 0.276 | 0.0039 | 0.0074 | -0.0024 | 0.0088 |
| 3 | 0.115 | 0.115 | 0.017 | 0.247 | 0.0031 | 0.0080 | 0.0012 | 0.0122 |
| 4 | -0.130 | 0.294 | -0.059 | 0.104 | -0.0089 | 0.0081 | -0.0041 | -0.0049 |
| 5 | -0.153 | 0.131 | 0.207 | 0.185 | -0.0104 | 0.0036 | 0.0057 | -0.0011 |
| 6 | -0.379 | 0.311 | 0.148 | 0.080 | -0.0259 | 0.0085 | 0.0041 | -0.0133 |

The aspheric lenses composed of the first lens 101, the second lens 102, and the third lens 103 in Numerical Examples 6 to 11 had a focal length f, an effective F number, and a half angle of view, $\omega$, of the values shown in the table below as overall characteristics. These results demonstrated that in proximity to an object to be imaged, the aspheric lenses of Numerical Examples 6 to 11 allow for observation in a wide range, do not deteriorate the whole optical performance, and enable a fine target object to be observed with high resolution, even when mounted to an existing imaging lens.

[Table 19]

| Parameter | Numerical Example | | | | | |
|---|---|---|---|---|---|---|
| | 1 | 2 | 3 | 4 | 5 | 6 |
| f | 3.747 | 2.401 | 3.183 | 3.418 | 3.066 | 3.282 |
| $\omega$ (°) | 34.066 | 16.100 | 22.950 | 57.620 | 50.120 | 57.230 |
| Effective F number | 1.745 | 1.841 | 2.441 | 2.621 | 2.351 | 2.517 |

[Additional Remark]

The present invention includes the following embodiments.

[1] An analysis device comprising:

a device holder configured to hold a microchamber device;

a light source configured to irradiate the microchamber device with light;

one or more aspheric lenses placed such that the optical axis thereof is substantially parallel to a normal line of a first surface of the microchamber device;

an imaging apparatus configured to image the microchamber device via the aspheric lenses;

a first optical filter positioned between the microchamber device and the imaging apparatus, the first optical filter cutting off light emitted from the light source and allowing at least a portion of light having a longer wavelength than the wavelength of the light emitted from the light source to pass therethrough; and

a light-shielding unit configured to suppress the detection, by the imaging apparatus, of light other than light generated from the microchamber device and detected by the imaging apparatus via the first optical filter and the aspheric lenses.

[2] The analysis device according to [1], wherein the analysis device comprises a plurality of the aspheric lenses.

[3] The analysis device according to [2], wherein

a plurality of the aspheric lenses are a first lens having positive optical power, a second lens having negative optical power, and a third lens having positive optical power in order from the microchamber device side, wherein

each of both surfaces of the first lens, the second lens, and the third lens is an aspheric surface, and

a plurality of the aspheric lenses satisfy the following expressions (1), (2), (3), (4), (5), and (6):

$$(1)\ 4.30 \leq f1/f \leq 4.95$$

$$(2)\ 0.120 \leq \varphi1/n1 \leq 0.160$$

$$(3)\ 0.0030 \leq \varphi1/v1 \leq 0.0050$$

$$(4)\ -3.20 \leq f2/f \leq -2.70$$

$$(5)\ -0.240 \leq \varphi2/n2 \leq -0.160$$

$$(6)\ -0.0200 \leq \varphi2/v2 \leq -0.0120$$

f: a focal length of the entire system of the attachment lens with respect to the d line,

f1: a focal length of the first lens with respect to the d line,

$\phi1$: a product of power of the first lens with respect to the d line and f, expressed as f/f1,

n1: a refractive index of the first lens with respect to the d line,

v1: an Abbe number of the first lens,

f2: a focal length of the second lens with respect to the d line,

$\phi2$: a product of power of the second lens with respect to the d line and f, expressed as f/f2,

n2: a refractive index of the second lens with respect to the d line, and

v2: an Abbe number of the second lens.

[4] The analysis device according to [3], wherein a plurality of the aspheric lenses further satisfy the following expressions (7) and (8):

$$(7)\ 0.000 \le P \le 0.510$$

$$(8)\ -0.0046 \le Q \le 0.0046$$

P: the sum of $\phi1/n1$, $\phi2/n2$, and $\phi3/n3$,

Q: the sum of $\phi1/v1$, $\phi2/v2$, and $\phi3/v3$,

$\phi3$: a product of power of the third lens with respect to the d line and f, expressed as f/f3,

f3: a focal length of the third lens with respect to the d line,

n3: a refractive index of the third lens with respect to the d line, and

v3: an Abbe number of the third lens.

[5] The analysis device according to [3] or [4], wherein a plurality of the aspheric lenses further satisfy the following expressions (9), (10), and (11):

$$(9)\ 1.10 \le f3/f \le 1.40$$

$$(10)\ 0.000 \le \varphi3/n3 \le 0.600$$

$$(11)\ 0.0000 \le \varphi3/v3 \le 0.0200$$

f3: a focal length of the third lens with respect to the d line,

$\phi3$: a product of power of the third lens with respect to the d line and f (f/f3),

n3: a refractive index of the third lens with respect to the d line, and

v3: an Abbe number of the third lens.

[6] The analysis device according to [2], wherein

a plurality of the aspheric lenses are a first lens having positive or negative optical power, a second lens having positive optical power, and a third lens having positive or negative optical power in order from the microchamber device side, wherein

each of both surfaces of the first lens, the second lens, and the third lens is an aspheric surface, and

a plurality of the aspheric lenses satisfy the following expressions (I), (II), (III), (IV), (V), and (VI):

$$(I)\ -10.0 \le f1/f \le 8.00$$

$$(II)\ -0.1500 \le \varphi1/v1 \le 0.0500$$

$$\text{(III) } 0.100 \le \varphi2/n2 \le 2.000$$

$$\text{(IV) } -80.0 \le f3/f \le 30.0$$

$$\text{(V) } -0.300 \le \varphi3/n3 \le 0.900$$

$$\text{(VI) } -0.0200 \le \varphi3/v3 \le 0.0500$$

f: a focal length of the entire system of the attachment lens with respect to the d line,

f1: a focal length of the first lens with respect to the d line,

$\phi1$: a product of power of the first lens with respect to the d line and f, expressed as f/f1,

v1: an Abbe number of the first lens,

f2: a focal length of the second lens with respect to the d line,

$\phi2$: a product of power of the second lens with respect to the d line and f, expressed as f/f2,

n2: a refractive index of the second lens with respect to the d line,

f3: a focal length of the third lens with respect to the d line,

$\phi3$: a product of power of the third lens with respect to the d line and f, expressed as f/f3,

n3: a refractive index of the third lens with respect to the d line, and

v3: an Abbe number of the third lens.

[7] The analysis device according to [6], wherein a plurality of the aspheric lenses further satisfy the following expressions (VII) and (VIII):

$$\text{(VII) } 0.000 \le P \le 0.800$$

$$\text{(VIII) } -0.0600 \le Q \le 0.0500$$

P: the sum of $\phi1/n1$, $\phi2/n2$, and $\phi3/n3$,

Q: the sum of $\phi1/v1$, $\phi2/v2$, and $\phi3/v3$,

n1: a refractive index of the first lens with respect to the d line, and

v2: an Abbe number of the second lens.

[8] The analysis device according to [6] or [7], wherein a plurality of the aspheric lenses further satisfy the following expressions (IX), (X), and (XI):

$$\text{(IX) } -1.500 \le \phi1/n1 \le 0.300$$

$$\text{(X) } 0.500 \le f2/f \le 3.50$$

$$(XI) \ 0.0050 \leq \phi2/\nu2 \leq 0.0400$$

n1: a refractive index of the first lens with respect to the d line, and

v2: an Abbe number of the second lens.

[9] The analysis device according to any one of [1] to [8], wherein the aspheric lenses are formed of a non-fluorescent material.

[10] The analysis device according to any one of [1] to [9], further comprising a second optical filter positioned between the light source and the microchamber device, the second optical filter cutting off a portion of light emitted from the light source.

[11] The analysis device according to any one of [1] to [10], further comprising a lens or a waveguide positioned between the light source and the microchamber device, the lens or the waveguide guiding light from the light source to the first surface of the microchamber device.

[12] The analysis device according to any one of [1] to [11], wherein the device holder is configured to be movable in the normal line direction of the first surface of the microchamber device.

[13] The analysis device according to any one of [1] to [12], wherein the first surface of the microchamber device has a plurality of wells thereon.

[14] The analysis device according to [13], further comprising an information processor connected or integrated with the imaging apparatus, wherein the information processor is configured to detect a well that emits light in response to the light among the plurality of wells imaged.

[15] A method for analyzing a sample, comprising:

introducing an analyte-containing sample to the microchamber device of an analysis device according to any one of [1] to [14];
irradiating the sample with excitation light corresponding to a compound contained in the sample by the light source; and
imaging the microchamber device with the imaging apparatus to detect luminescence derived from the compound excited with the excitation light.

[16] The method according to [15], wherein the first optical filter cuts off light having a wavelength corresponding to the excitation light for the compound and allows light having a wavelength corresponding to the light emitted from the compound excited to pass therethrough.

[17] An analysis device comprising:

a device holder configured to hold a microchamber device;
a light source configured to irradiate the microchamber device with light;
one or more aspheric lenses placed such that the optical axis thereof is substantially parallel to a normal line of a first surface of the microchamber device;
an imaging apparatus holder configured to hold an imaging apparatus at a position that enables the microchamber device to be imaged via the aspheric lenses;
a first optical filter positioned between the microchamber device and the imaging apparatus to be held, the first optical filter cutting off light emitted from the light source and allowing at least a portion of light having a longer wavelength than the wavelength of the light emitted from the light source to pass therethrough; and
a light-shielding unit configured to suppress the detection, by the imaging apparatus to be held, of light other than light generated from the microchamber device and detected by the imaging apparatus to be held via the first optical filter and the aspheric lenses.

[18] The analysis device according to [17], wherein

the analysis device comprises a plurality of the aspheric lenses, and

a plurality of the aspheric lenses are a first lens having positive optical power, a second lens having negative optical power, and a third lens having positive optical power in order from the microchamber device side, wherein

each of both surfaces of the first lens, the second lens, and the third lens is an aspheric surface, and

a plurality of the aspheric lenses satisfy the following expressions (1), (2), (3), (4), (5), and (6):

$$(1)\ 4.30 \leq f1/f \leq 4.95$$

$$(2)\ 0.120 \leq \varphi1/n1 \leq 0.160$$

$$(3)\ 0.0030 \leq \varphi1/\nu1 \leq 0.0050$$

$$(4)\ -3.20 \leq f2/f \leq -2.70$$

$$(5)\ -0.240 \leq \varphi2/n2 \leq -0.160$$

$$(6)\ -0.0200 \leq \varphi2/\nu2 \leq -0.0120$$

f: a focal length of the entire system of the attachment lens with respect to the d line,

f1: a focal length of the first lens with respect to the d line,

$\phi1$: a product of power of the first lens with respect to the d line and f, expressed as f/f1,

n1: a refractive index of the first lens with respect to the d line,

ν1: an Abbe number of the first lens,

f2: a focal length of the second lens with respect to the d line,

$\phi2$: a product of power of the second lens with respect to the d line and f, expressed as f/f2,

n2: a refractive index of the second lens with respect to the d line, and

ν2: an Abbe number of the second lens.

[19] The analysis device according to [17], wherein

the analysis device comprises a plurality of the aspheric lenses, and
a plurality of the aspheric lenses are a first lens having positive optical power, a second lens having negative optical power, and a third lens having positive optical power in order from the microchamber device side, wherein
each of both surfaces of the first lens, the second lens, and the third lens is an aspheric surface, and
a plurality of the aspheric lenses satisfy the following expressions (I), (II), (III), (IV), (V), and (VI):

$$(I)\ -10.0 \leq f1/f \leq 8.00$$

$$(II)\ -0.1500 \leq \varphi1/\nu1 \leq 0.0500$$

EP 4 692 768 A1

$$(III)\ 0.100 \le \varphi2/n2 \le 2.000$$

$$(IV)\ -80.0 \le f3/f \le 30.0$$

$$(V)\ -0.300 \le \varphi3/n3 \le 0.900$$

$$(VI)\ -0.0200 \le \varphi3/v3 \le 0.0500$$

f: a focal length of the entire system of the attachment lens with respect to the d line,

f1: a focal length of the first lens with respect to the d line,

$\phi1$: a product of power of the first lens with respect to the d line and f, expressed as f/f1,

v1: an Abbe number of the first lens,

f2: a focal length of the second lens with respect to the d line,

$\phi2$: a product of power of the second lens with respect to the d line and f, expressed as f/f2,

n2: a refractive index of the second lens with respect to the d line,

f3: a focal length of the third lens with respect to the d line,

$\phi3$: a product of power of the third lens with respect to the d line and f, expressed as f/f3,

n3: a refractive index of the third lens with respect to the d line, and

v3: an Abbe number of the third lens.

[20] A method for analyzing a sample, comprising:

placing an imaging apparatus in the imaging apparatus holder of an analysis device according to any one of [17] to [19];

introducing an analyte-containing sample to the microchamber device;

irradiating the sample with excitation light corresponding to a compound contained in the sample by the light source; and

imaging the microchamber device with the imaging apparatus to detect luminescence derived from the compound excited with the excitation light.

**Examples**

Hereinafter, the present invention will be described more specifically with reference to Examples and Comparative Examples. The present invention is not limited by the following Examples by any means.

[Example 1]

An analysis device having a condenser lens instead of a waveguide in the configuration shown in Figure 1 was prepared. The aspheric lenses used had the optical system composed of a plurality of lens shown in Numerical Example 1. The imaging apparatus used was a smartphone (iPhone(R) 7Plus), which was also used as an information processor. Imaging conditions involved ISO sensitivity of 160, light exposure for 0.5 seconds, and spot photometry. The light source used was LED (HotRed) with a wavelength of 365 nm to which Edmund45-083 lens (condenser lens) was attached. The second optical filter used was a single-band pass filter (Semrock Inc.) with a transmission center wavelength of 370 nm and a transmission wavelength band of 36 nm. The first optical filter used was a long pass filter (Mitsubishi Gas Chemical Co., Inc.) that allowed a wavelength of 409 nm or more to pass through it.

A microchamber device having a 15 mm long, 50 mm wide, and 0.7 mm thick rectangular flat-plate like form as the whole shape provided on its one surface with approximately 1.18 million wells of 3 μm in bottom diameter and 3 μm in depth disposed in a circular region of 8 mm in diameter was prepared by injection molding using a cycloolefin polymer. In this microchamber device, the intervals between the center positions of the wells were 7 μm.

A solution containing 10 pM alkaline phosphatase enzyme and 1 mM 4-methylumbelliferyl phosphate (4-MUP) was added dropwise to the microchamber device, which was then sealed with transparent tape 145RN for packaging (3M Company) such that each well was filled with the solution and no air bubble was formed. This microchamber device was installed in the device holder such that the bottom (surface provided with the wells) faced the imaging apparatus. After a lapse of 30 minutes from enclosure of the alkaline phosphatase enzyme and the 4-MUP, the microchamber device was imaged.

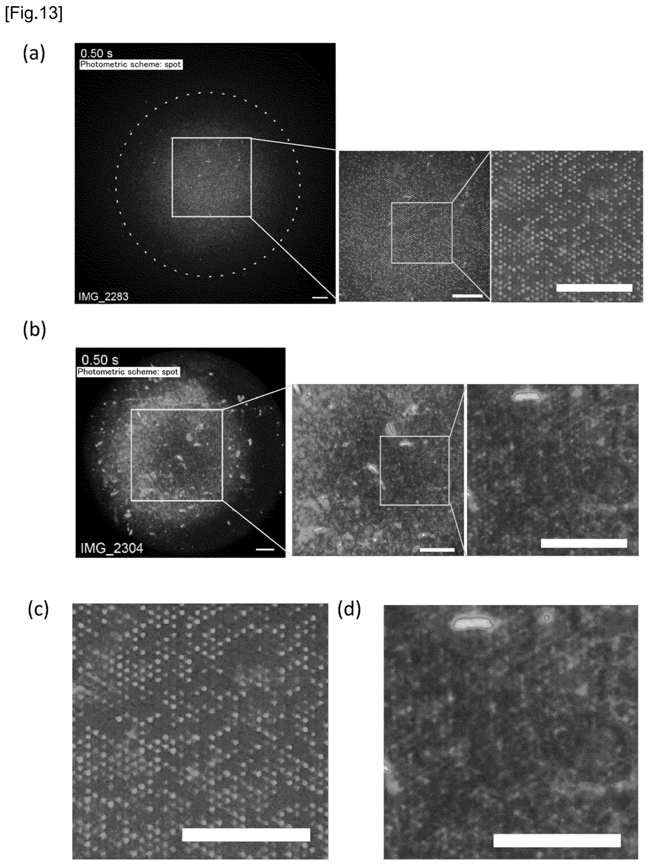

The imaging results are shown in Figures 13(a) and 13(c). Figure 13(c) is an enlarged view of the rightmost box of Figure 13(a). Figures 13(a) and 13(c) demonstrated that the analysis device of the present embodiment was able to confirm the luminescence of each well in the microchamber device and was able to conveniently achieve digital assay using a smartphone.

[Comparative Example 1]

Imaging was performed using handy microscope RXT300M (Raymay Fujii Corp.) to which a smartphone (iPhone(R) 7Plus) was attached, instead of the analysis device of Example 1. The imaging conditions, the light source, and the optical filter disposed between the light source and the microchamber device were the same as in Example 1. For imaging, a long pass filter (Semrock Inc.) that allowed a wavelength of 409 nm or more to pass through it was installed between the lens of the handy microscope and the microchamber device.

A solution containing alkaline phosphatase enzyme and 4-MUP was enclosed in the microchamber device in the same manner as in Example 1. After a lapse of 60 minutes from enclosure of the alkaline phosphatase enzyme and the 4-MUP, the microchamber device was imaged.

The imaging results are shown in Figures 13(b) and 13(d). Figure 13(d) is an enlarged view of the rightmost box of Figure 13(b). In Figures 13(b) and 13(d), luminescence of each well in the microchamber device was not clearly observed.

[Example 2]

The same microchamber device as in Example 1 and a glass cover made of $SiO_2$ glass were taped together with double-faced tape cut into the shape of a flow path to prepare a microchamber device as shown in Figure 5. A solution containing 10 pM alkaline phosphatase enzyme and 1 mM 4-MUP was introduced to the prepared microchamber device, and a perfluorocarbon solution (FC40) was subsequently introduced thereto so that the alkaline phosphatase enzyme and the 4-MUP were introduced only to the wells of the microchamber device. After replacement of the perfluorocarbon solution with Fomblin(R), the microchamber device was placed in the device holder of the same analysis device as in Example 1 such that the bottom (surface provided with the wells) faced the imaging apparatus, followed by analysis. After a lapse of 30 minutes from enclosure of the alkaline phosphatase enzyme and the 4-MUP, the microchamber device was imaged.

The imaging apparatus used was a smartphone (iPhone(R) 7Plus), which was also used as an information processor. Imaging conditions involved ISO sensitivity of 160, light exposure for 0.25 seconds, and multi-pattern photometry. The light source used was LED (HotRed) with a wavelength of 365 nm to which Edmund45-083 lens (condenser lens) was attached. The second optical filter used was a single-band pass filter (Semrock Inc.) with a transmission center wavelength of 370 nm and a transmission wavelength band of 36 nm. The first optical filter used was a long pass filter (Mitsubishi Gas Chemical Co., Inc.) that allowed a wavelength of 409 nm or more to pass through it.

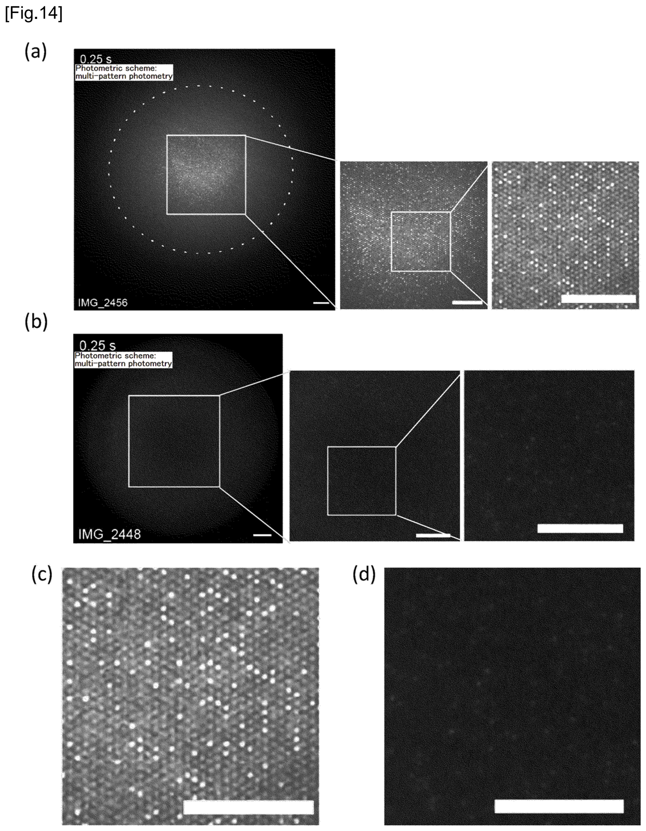

The imaging results are shown in Figures 14(a) and 14(c). Figure 14(c) is an enlarged view of the rightmost box of Figure 14(a). Figures 14(a) and 14(c) demonstrated that the analysis device of the present embodiment was able to confirm the luminescence of each well in the microchamber device and was able to conveniently achieve digital assay using a smartphone.

[Comparative Example 2]

Imaging was performed using handy microscope RXT300M (Raymay Fujii Corp.) to which a smartphone (iPhone(R) 7Plus) was attached, instead of the analysis device of Example 2. The imaging conditions, the light source, and the optical filter disposed between the light source and the microchamber device were the same as in Example 2. For imaging, a long pass filter (Semrock Inc.) that allowed a wavelength of 409 nm or more to pass through it was installed between the lens of the handy microscope and the microchamber device.

A solution containing alkaline phosphatase enzyme and 4-MUP was enclosed in the microchamber device in the same manner as in the Example. After a lapse of 60 minutes from enclosure of the alkaline phosphatase enzyme and the 4-MUP, the microchamber device was imaged.

The imaging results are shown in Figures 14(b) and 14(d). Figure 14(d) is an enlarged view of the rightmost box of Figure 14(b). In Figures 14(b) and 14(d), luminescence of each well in the microchamber device was not clearly observed.

**Reference Signs List**

10 and 20: analysis device, 100: aspheric lenses, 101: first lens, 102: second lens, 103: third lens, 200: first optical filter, 220: second optical filter, 300: microchamber device, 302: well, 304: sidewall, 304a: upper surface, 306: plate-like member, 308: sample, 308a: analyte, 308b: chromogenic substrate, 310: lid portion, 312: flow path, 320: device holder, 400: imaging apparatus, 420: imaging lens, 440: imaging apparatus holder, 460: hole, 500: light source, 520: waveguide, and 600 and 610: light-shielding unit.

**Claims**

1. An analysis device comprising:

    a device holder configured to hold a microchamber device;
    a light source configured to irradiate the microchamber device with light;
    one or more aspheric lenses placed such that the optical axis thereof is substantially parallel to a normal line of a first surface of the microchamber device;
    an imaging apparatus configured to image the microchamber device via the aspheric lenses;
    a first optical filter positioned between the microchamber device and the imaging apparatus, the first optical filter cutting off light emitted from the light source and allowing at least a portion of light having a longer wavelength than the wavelength of the light emitted from the light source to pass therethrough; and
    a light-shielding unit configured to suppress the detection, by the imaging apparatus, of light other than light generated from the microchamber device and detected by the imaging apparatus via the first optical filter and the aspheric lenses.

2. The analysis device according to claim 1, wherein the analysis device comprises a plurality of the aspheric lenses.

3. The analysis device according to claim 2, wherein

    a plurality of the aspheric lenses are a first lens having positive optical power, a second lens having negative optical power, and a third lens having positive optical power in order from the microchamber device side, wherein each of both surfaces of the first lens, the second lens, and the third lens is an aspheric surface, and
    a plurality of the aspheric lenses satisfy the following expressions (1), (2), (3), (4), (5), and (6):

$$(1)\ 4.30 \leq f1/f \leq 4.95$$

$$(2)\ 0.120 \leq \varphi1/n1 \leq 0.160$$

$$(3)\ 0.0030 \leq \varphi1/\nu1 \leq 0.0050$$

$$(4)\ \text{-}3.20 \leq f2/f \leq \text{-}2.70$$

$$(5)\ \text{-}0.240 \leq \varphi2/n2 \leq \text{-}0.160$$

$$(6)\ \text{-}0.0200 \leq \varphi2/\nu2 \leq \text{-}0.0120$$

f: a focal length of the entire system of the attachment lens with respect to the d line,
f1: a focal length of the first lens with respect to the d line,
$\phi$1: a product of power of the first lens with respect to the d line and f, expressed as f/f1,
n1: a refractive index of the first lens with respect to the d line,
v1: an Abbe number of the first lens,
f2: a focal length of the second lens with respect to the d line,
$\phi$2: a product of power of the second lens with respect to the d line and f, expressed as f/f2,
n2: a refractive index of the second lens with respect to the d line,
v2: an Abbe number of the second lens.

4. The analysis device according to claim 3, wherein a plurality of the aspheric lenses further satisfy the following expressions (7) and (8):

$$(7)\ 0.000 \le P \le 0.510$$

$$(8)\ -0.0046 \le Q \le 0.0046$$

P: the sum of $\phi$1/n1, $\phi$2/n2, and $\phi$3/n3,
Q: the sum of $\phi$1/v1, $\phi$2/v2, and $\phi$3/v3,
$\phi$3: a product of power of the third lens with respect to the d line and f, expressed as f/f3,
f3: a focal length of the third lens with respect to the d line,
n3: a refractive index of the third lens with respect to the d line, and
v3: an Abbe number of the third lens.

5. The analysis device according to claim 3, wherein a plurality of the aspheric lenses further satisfy the following expressions (9), (10), and (11):

$$(9)\ 1.10 \le f3/f \le 1.40$$

$$(10)\ 0.000 \le \phi3/n3 \le 0.600$$

$$(11)\ 0.0000 \le \phi3/v3 \le 0.0200$$

f3: a focal length of the third lens with respect to the d line,
$\phi$3: a product of power of the third lens with respect to the d line and f, expressed as f/f3,
n3: a refractive index of the third lens with respect to the d line, and
v3: an Abbe number of the third lens.

6. The analysis device according to claim 2, wherein

a plurality of the aspheric lenses are a first lens having positive or negative optical power, a second lens having positive optical power, and a third lens having positive or negative optical power in order from the microchamber device side, wherein
each of both surfaces of the first lens, the second lens, and the third lens is an aspheric surface, and
a plurality of the aspheric lenses satisfy the following expressions (I), (II), (III), (IV), (V), and (VI):

$$(I)\ -10.0 \le f1/f \le 8.00$$

$$(II)\ -0.1500 \le \varphi1/v1 \le 0.0500$$

$$(III)\ 0.100 \le \varphi2/n2 \le 2.000$$

$$\text{(IV) } -80.0 \leq f3/f \leq 30.0$$

$$\text{(V) } -0.300 \leq \varphi3/n3 \leq 0.900$$

$$\text{(VI) } -0.0200 \leq \varphi3/v3 \leq 0.0500$$

f: a focal length of the entire system of the attachment lens with respect to the d line,
f1: a focal length of the first lens with respect to the d line,
$\phi$1: a product of power of the first lens with respect to the d line and f, expressed as f/f1,
v1: an Abbe number of the first lens,
f2: a focal length of the second lens with respect to the d line,
$\phi$2: a product of power of the second lens with respect to the d line and f, expressed as f/f2,
n2: a refractive index of the second lens with respect to the d line,
f3: a focal length of the third lens with respect to the d line,
$\phi$3: a product of power of the third lens with respect to the d line and f, expressed as f/f3,
n3: a refractive index of the third lens with respect to the d line, and
v3: an Abbe number of the third lens.

7. The analysis device according to claim 6, wherein a plurality of the aspheric lenses further satisfy the following expressions (VII) and (VIII):

$$\text{(VII) } 0.000 \leq P \leq 0.800$$

$$\text{(VIII) } -0.0600 \leq Q \leq 0.0500$$

P: the sum of $\phi$1/n1, $\phi$2/n2, and $\phi$3/n3,
Q: the sum of $\phi$1/v1, $\phi$2/v2, and $\phi$3/v3,
n1: a refractive index of the first lens with respect to the d line, and
v2: an Abbe number of the second lens.

8. The analysis device according to claim 6, wherein a plurality of the aspheric lenses further satisfy the following expressions (IX), (X), and (XI):

$$\text{(IX) } -1.500 \leq \varphi1/n1 \leq 0.300$$

$$\text{(X) } 0.500 \leq f2/f \leq 3.50$$

$$\text{(XI) } 0.0050 \leq \varphi2/v2 \leq 0.0400$$

n1: a refractive index of the first lens with respect to the d line, and
v2: an Abbe number of the second lens.

9. The analysis device according to claim 1, wherein the aspheric lenses are formed of a non-fluorescent material.

10. The analysis device according to claim 1, further comprising a second optical filter positioned between the light source and the microchamber device, the second optical filter cutting off a portion of light emitted from the light source.

11. The analysis device according to claim 1, further comprising a lens or a waveguide positioned between the light source and the microchamber device, the lens or the waveguide guiding light from the light source to the first surface of the microchamber device.

12. The analysis device according to claim 1, wherein the device holder is configured to be movable in the normal line direction of the first surface of the microchamber device.

13. The analysis device according to claim 1, wherein the first surface of the microchamber device has a plurality of wells thereon.

14. The analysis device according to claim 13, further comprising an information processor connected or integrated with the imaging apparatus, wherein the information processor is configured to detect a well that emits light in response to the light among the plurality of wells imaged.

15. A method for analyzing a sample, comprising:

introducing an analyte-containing sample to the microchamber device of the analysis device according to any one of claims 1 to 14;
irradiating the sample with excitation light corresponding to a compound contained in the sample by the light source; and
imaging the microchamber device with the imaging apparatus to detect luminescence derived from the compound excited with the excitation light.

16. The method according to claim 15, wherein the first optical filter cuts off light having a wavelength corresponding to the excitation light for the compound and allows light having a wavelength corresponding to the light emitted from the compound excited to pass therethrough.

17. An analysis device comprising:

a device holder configured to hold a microchamber device;
a light source configured to irradiate the microchamber device with light;
one or more aspheric lenses placed such that the optical axis thereof is substantially parallel to a normal line of a first surface of the microchamber device;
an imaging apparatus holder configured to hold an imaging apparatus at a position that enables the microchamber device to be imaged via the aspheric lenses;
a first optical filter positioned between the microchamber device and the imaging apparatus to be held, the first optical filter cutting off light emitted from the light source and allowing at least a portion of light having a longer wavelength than the wavelength of the light emitted from the light source to pass therethrough; and
a light-shielding unit configured to suppress the detection, by the imaging apparatus to be held, of light other than light generated from the microchamber device and detected by the imaging apparatus to be held via the first optical filter and the aspheric lenses.

18. The analysis device according to claim 17, wherein

the analysis device comprises a plurality of the aspheric lenses, and
a plurality of the aspheric lenses are a first lens having positive optical power, a second lens having negative optical power, and a third lens having positive optical power in order from the microchamber device side, wherein each of both surfaces of the first lens, the second lens, and the third lens is an aspheric surface, and
a plurality of the aspheric lenses satisfy the following expressions (1), (2), (3), (4), (5), and (6):

$$(1)\ 4.30 \leq f1/f \leq 4.95$$

$$(2)\ 0.120 \leq \varphi1/n1 \leq 0.160$$

$$(3)\ 0.0030 \leq \varphi1/\nu1 \leq 0.0050$$

$$(4)\ \text{-}3.20 \leq f2/f \leq \text{-}2.70$$

$$(5)\ \text{-}0.240 \leq \varphi2/n2 \leq \text{-}0.160$$

$$(6)\ -0.0200 \leq \varphi2/v2 \leq -0.0120$$

f: a focal length of the entire system of the attachment lens with respect to the d line,
f1: a focal length of the first lens with respect to the d line,
$\phi$1: a product of power of the first lens with respect to the d line and f, expressed as f/f1,
n1: a refractive index of the first lens with respect to the d line,
v1: an Abbe number of the first lens,
f2: a focal length of the second lens with respect to the d line,
$\phi$2: a product of power of the second lens with respect to the d line and f, expressed as f/f2,
n2: a refractive index of the second lens with respect to the d line,
v2: an Abbe number of the second lens.

19. The analysis device according to claim 17, wherein

the analysis device comprises a plurality of the aspheric lenses, and
a plurality of the aspheric lenses are a first lens having positive optical power, a second lens having negative optical power, and a third lens having positive optical power in order from the microchamber device side, wherein each of both surfaces of the first lens, the second lens, and the third lens is an aspheric surface, and
a plurality of the aspheric lenses satisfy the following expressions (I), (II), (III), (IV), (V), and (VI):

$$(I)\ -10.0 \leq f1/f \leq 8.00$$

$$(II)\ -0.1500 \leq \varphi1/v1 \leq 0.0500$$

$$(III)\ 0.100 \leq \varphi2/n2 \leq 2.000$$

$$(IV)\ -80.0 \leq f3/f \leq 30.0$$

$$(V)\ -0.300 \leq \varphi3/n3 \leq 0.900$$

$$(VI)\ -0.0200 \leq \varphi3/v3 \leq 0.0500$$

f: a focal length of the entire system of the attachment lens with respect to the d line,
f1: a focal length of the first lens with respect to the d line,
$\phi$1: a product of power of the first lens with respect to the d line and f, expressed as f/f1,
v1: an Abbe number of the first lens,
f2: a focal length of the second lens with respect to the d line,
$\phi$2: a product of power of the second lens with respect to the d line and f, expressed as f/f2,
n2: a refractive index of the second lens with respect to the d line,
f3: a focal length of the third lens with respect to the d line,
$\phi$3: a product of power of the third lens with respect to the d line and f, expressed as f/f3,
n3: a refractive index of the third lens with respect to the d line, and
v3: an Abbe number of the third lens.

20. A method for analyzing a sample, comprising:

placing an imaging apparatus in the imaging apparatus holder of the analysis device according to any one of claims 17 to 19;
introducing an analyte-containing sample to the microchamber device;
irradiating the sample with excitation light corresponding to a compound contained in the sample by the light source; and
imaging the microchamber device with the imaging apparatus to detect luminescence derived from the compound excited with the excitation light.

[Fig.1]

[Fig.2]

[Fig.3]

[Fig.4]

[Fig.5]

[Fig.6]

[Fig.7]

[Fig.8]

[Fig.9]

[Fig.10]

[Fig.11]

[Fig.12]

[Fig.13]

(a)

(b)

(c)

(d)

[Fig.14]

(a)

(b)

(c)

(d)

## INTERNATIONAL SEARCH REPORT

| International application No. |
|---|
| **PCT/JP2024/011561** |

**A. CLASSIFICATION OF SUBJECT MATTER**

*G01N 21/64*(2006.01)i; *G01N 21/03*(2006.01)i; *G02B 13/18*(2006.01)i; *G02B 15/10*(2006.01)i; *G02B 21/36*(2006.01)i
FI:   G01N21/64 Z; G01N21/03 Z; G02B15/10; G02B13/18; G02B21/36

According to International Patent Classification (IPC) or to both national classification and IPC

**B. FIELDS SEARCHED**

Minimum documentation searched (classification system followed by classification symbols)

G01N21/62-G01N21/74; G01N21/03-G01N21/05; G02B13/18; G02B15/10; G02B21/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); Scopus

**C. DOCUMENTS CONSIDERED TO BE RELEVANT**

| Category* | Citation of document, with indication, where appropriate, of the relevant passages | Relevant to claim No. |
|---|---|---|
| Y | MINAGAWA, Y. et al., Mobile imaging platform for digital influenza virus counting, Lab on a Chip, 17 July 2019, vol. 19, pp. 2678-2687, DOI: 10.1039/c9lc00370c<br>section 2, fig. 1 | 1-2, 6, 9-17, 19-20 |
| A | | 3-5, 7-8, 18 |
| Y | BIAN, Y. et al., Smart-phone phase contrast microscope with a singlet lens and deep learning, Optics and Laser Technology, 06 February 2021, vol. 139, pp. 106900-1 to 106900-8, https://doi.org/10.1016/j.optlastec.2020.106900<br>sections 2.2, 2.3, 3.3, fig. 2, 7 | 1-2, 6, 9-17, 19-20 |
| Y | JP 2002-355036 A (FUJI PHOTO FILM CO., LTD.) 10 December 2002 (2002-12-10)<br>paragraphs [0297]-[0320], fig. 14-17 | 1-2, 6, 9-17, 19-20 |
| Y | JP 2008-241999 A (FUJINON CORP.) 09 October 2008 (2008-10-09)<br>paragraphs [0017], [0018], [0024], [0041], fig. 1, 8 | 2, 6, 19 |
| Y | JP 2005-173298 A (MILESTONE CO., LTD.) 30 June 2005 (2005-06-30)<br>paragraphs [0001], [0049]-[0056], [0059]-[0062], table 1, fig. 2 | 2, 6, 19 |

☐ Further documents are listed in the continuation of Box C.          ☑ See patent family annex.

| | |
|---|---|
| *     Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **01 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/011561**

| Patent document cited in search report | | | Publication date (day/month/year) | Patent family member(s) | | | Publication date (day/month/year) |
|---|---|---|---|---|---|---|---|
| JP | 2002-355036 | A | 10 December 2002 | US | 2002/0016009 | A1 | |
| | | | | paragraphs [0329]-[0352], fig. 14-17 | | | |
| | | | | US | 2002/0061534 | A1 | |
| | | | | US | 2006/0266958 | A1 | |
| | | | | EP | 1178314 | A2 | |
| | | | | EP | 1256794 | A2 | |
| | | | | JP | 2002-357600 | A | |
| | | | | JP | 2002-357615 | A | |
| | | | | JP | 2003-28993 | A | |
| JP | 2008-241999 | A | 09 October 2008 | US | 2008/0239510 | A1 | |
| | | | | paragraphs [0051], [0052], [0058]-[0060], [0075], fig. 1, 8 | | | |
| | | | | CN | 101276038 | A | |
| JP | 2005-173298 | A | 30 June 2005 | US | 2005/0128334 | A1 | |
| | | | | paragraphs [0002], [0091]-[0097], [0100]-[0118], table 1, fig. 2 | | | |
| | | | | EP | 1542049 | A1 | |
| | | | | KR | 10-2005-0059390 | A | |
| | | | | CN | 1627118 | A | |
| | | | | JP | 3544972 | B1 | |

Form PCT/ISA/210 (patent family annex) (July 2022)

**EP 4 692 768 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3727026 B
- JP 2018038384 A
- JP 2022031760 A
- WO 2017200070 A
- WO 2018181488 A
- WO 2019168200 A
- WO 2020179858 A

**Non-patent literature cited in the description**

- **K. V. TABATA et al.** *Sci.Rep.*, 2019, vol. 9, 1067
- **Y. MINAGAWA et al.** *Lab on a Chip*, 2019, vol. 19, 2678
- **K. V. TABATA et al.** *Sci. Rep.*, 2019, vol. 9, 1067